# EUROPEAN PATENT SPECIFICATION

(11) **EP 1 785 647 B1**
(45) Date of publication and mention of the grant of the patent: **25.06.2014**
(21) Application number: 05765491.5
(22) Date of filing: 07.07.2005
(51) Int. Cl.: F16H 61/10, F16H 61/04, F16H 59/02, F16H 59/18, F16H 59/42, F16H 59/44, F16H 59/48, F16H 59/54, F16H 61/662

(54) **SADDLE RIDING-TYPE VEHICLE AND SPEED CHANGE CONTROL DEVICE FOR STEPLESS SPEED CHANGER**
MOTORRAD UND GANGWECHSEL-STEUERVORRICHTUNG FÜR STUFENLOSEN GANGWECHSLER
MOTOCYCLETTE ET DISPOSITIF DE CONTRÔLE DE CHANGEMENT DE VITESSES POUR DISPOSITIF DE CHANGEMENT DE VITESSES A VARIATION CONTINUE

(30) Priority: 09.07.2004 JP 2004203851
(43) Date of publication of application: 16.05.2007
(73) Proprietor: Yamaha Hatsudoki Kabushiki Kaisha, Iwata-shi, Shizuoka 438-8501 (JP)
(72) Inventor: UNNO, Toshio, Iwata-shi, Shizuoka 438-8501 (JP)
(74) Representative: Grünecker, Kinkeldey, Stockmair & Schwanhäusser
(86) International application number: PCT/JP2005/012608
(87) International publication number: WO 2006/006506

(56) References cited:
- EP-A2- 1 178 243
- EP-A2- 1 318 334
- DE-A1- 3 139 838
- DE-A1- 10 065 725
- DE-A1- 19 704 664
- GB-A- 2 311 572
- JP-A- 1 153 862
- JP-A- 1 176 846
- JP-A- 2 150 562
- JP-A- 4 131 558
- JP-A- 9 217 799
- JP-A- 10 002 404
- JP-A- 58 074 938
- JP-A- 60 260 754
- JP-A- 62 125 923
- JP-A- 62 273 183
- JP-A- 2001 517 765
- JP-A- 2005 023 991
- JP-B2- 2 542 860

## Description

The present invention relates to a method to control a speed change of a continuously variable transmission mounted in a straddle type vehicle, a straddle type vehicle (for example, two-wheeled motor vehicle) and a speed change control unit of a continuously variable transmission mounted in a straddle type vehicle.

A V-belt type continuously variable transmission is widely used for a straddle type vehicle such as a scooter type two-wheeled motor vehicle. This V-belt type continuously variable transmission is constructed of a pair of primary sheave and secondary sheave, which are arranged on a primary shaft having the output of a power source such as an engine inputted thereto and a secondary shaft having an output to a driving wheel taken therefrom, respectively, and have their grooves varied in width, and has a V belt looped around both of the sheaves, and has the looping radiuses of the V belt with respect to the respective sheaves adjusted by changing the groove widths of the respective sheaves by a groove width adjusting mechanism to thereby adjust a speed change ratio between both of the sheaves continuously variably.

Usually, each of the primary sheave and the secondary sheave is constructed of a fixed flange and a moving flange which form a V-shaped groove between them, and the respective moving flanges are provided so as to move freely in the axial direction of the primary shaft or the secondary shaft. A speed change ratio can be adjusted continuously variably by moving the moving flange by the groove width adjusting mechanism.

Conventional V-belt type continuously variable transmissions of this type include a transmission in which the moving flange of the primary sheave to adjust a groove width is moved by an electric motor. Since the moving flange can be moved in both directions of a direction to narrow the groove width of the primary sheave (top side) and a direction to widen the groove width (low side), the groove width can be freely adjusted (for example, refer to patent document 1).
Patent document 1: Japanese Patent No. 3043061
Patent document 2: Japanese Patent No. 2950957
Patent document 3: JP-A-62-175228

The prior art document DE 100 65 725 A1 refers to a method and a device for operating a drive train of a vehicle, wherein said teaching relates to an automatic transmission and specific clutch operation at start of driving or gear shift. Moreover, said prior art document refers to a kick down operation according to the driver's request which can be carried out in combination with an accelerator pedal, but it is also indicated to provide a tip lever being separated from the accelerator pedal. Said tip lever is directly operated by the driver in order to request a kick down operation.

The prior art document EP 1 178 243 A2 refers to a shift control system for a continuously variable transmission which would be operated in a normal mode as well as a kick down mode according to a kick down request.

The prior art document EP 1 318 334 A2 also refers to a shift control apparatus for a CVT, wherein kick down operation is carried out by means of operating a kick down mode and further action is done to cancel the kick down mode.

Prior art document DE 31 39 838 A1 discloses a kickdown function for modifying the operation of an automatic transmission to make the higher power of a lower gear more extensively available arranged to take place in response to several operating parameters only one of which is the operation of a kickdown switch and the normal gear pattern is restored likewise in response to any one of several parameters.

In a scooter type two-wheeled motor vehicle provided with a mechanism for electronically controlling a V-belt type automatic continuously variable transmission, a speed change ratio is automatically changed on a program (map) previously inputted with respect to a vehicle speed and the number of revolutions of the engine (accelerator position) without requiring the operation of a rider. For this reason, the rider can easily operate the vehicle and hence the applying of this automatic continuously variable transmission to various kinds of vehicles has been tried at present.

In contrast, the two-wheeled motor vehicle provided with an automatic continuously variable transmission for performing this kind of electronic control has the merit of facilitating a driving operation, whereas the two-wheeled motor vehicle cannot exert the engine brake effectively at the time of returning the accelerator and hence cannot take advantage of engine brake effectively for driving. Moreover, the two-wheeled motor vehicle provided with an automatic continuously variable transmission cannot perform such a kick down based on the intention of a rider that is employed in an AT vehicle such as automobile and hence is slow in acceleration at the time of passing other vehicle or at the time of running on a climbing road.

To solve these problems, there are known: an automatic continuously variable transmission provided with a deceleration lever for inputting the intention of a driver and capable of setting the speed change ratio manually according to the position of the deceleration lever (for example, refer to patent document 2); an automatic continuously variable transmission capable of changing a speed change ratio forcibly; and an automatic continuously variable transmission provided with a switch for shifting down manually (for example, refer to patent document 3) are known. According to these, these automatic continuously variable transmissions can take advantage of the automatic continuously variable transmission and at the same time can produce an arbitrary speed change ratio optionally and continuously by the intention of a rider and makes it possible to apply engine brake to driving and to perform shifting down in advance, thereby resolving the problem of being slow in acceleration.

However, consideration is not given to a technology on how to shift down a continuously variable transmission forcibly manually by the intention of a rider and then to return the mode (here referred to as "kick down mode") to a normal mode. That is, the inventor of this application thinks that while shifting down is performed as required on the basis of the intention of a rider, the rider might desire shifting up following the shifting down to be automatically performed. In other words, it is thought that if a straddle type vehicle capable of returning a kick down mode smoothly to a normal speed change mode can be developed, the straddle type vehicle can improve the riding comfort of the rider.

An object of the present invention is to provide a method to control a speed change of a continuously variable transmission mounted in a straddle type vehicle, a straddle type vehicle (for example, a scooter type two-wheeled motor vehicle) and a speed change control unit of a continuously variable transmission that can improve the riding comfort of a rider and can electronically control the speed change of a continuously variable transmission.

According to the present invention said object is solved by method to control a speed change of a continuously variable transmission mounted in a straddle type vehicle having the features of independent claim 1, by a straddle type vehicle having the features of independent claim 4, and by a speed change control unit of a continuously variable transmission having the features of independent claim 16. Preferred embodiments are laid down in the dependent claims.

Accordingly, it is also provided a speed change control unit of a continuously variable transmission that can set and release a kick down mode of a temporary speed change ratio correction mode for assisting acceleration or deceleration according to driving conditions and a driver's intention.

A straddle type vehicle including: a driving source having an output controlled according to an accelerator operating part operated by a rider; a continuously variable transmission connected to the driving source; and a control unit for controlling the continuously variable transmission electronically, and is characterized in that the control unit performs control of shifting to a kick down mode of shifting a speed change ratio to a lower side than a speed change ratio at the time of a normal mode according to a kick down operating part provided separately from the accelerator operating part and operated by the rider, and detects a state of the straddle type vehicle other than the kick down operating part and issues a kick down release command according to the state, thereby performing control of releasing the kick down mode and of returning the kick down mode to the normal mode.

A preferred embodiment is characterized in that the control unit has a throttle position sensor, which detects a degree of opening of a throttle, electrically connected thereto, and that the kick down release command issued according to the state of the straddle type vehicle is issued on the basis of a throttle position signal outputted from the throttle position sensor.

A preferred embodiment is characterized in that the kick down release command is issued on the basis of the throttle position signal to show a closed state for a specified time after an open state for a specified time.

A preferred embodiment is characterized in that the control unit has an accelerator position sensor, which detects a state of the accelerator operating part, electrically connected thereto, and that the kick down release command issued according to the state of the straddle type vehicle is issued on the basis of an accelerator position signal outputted from the accelerator position sensor.

A preferred embodiment is characterized in that the control unit has a vehicle speed sensor, which detects a vehicle speed of the straddle type vehicle, electrically connected thereto, and that the kick down release command issued according to a running state of the straddle type vehicle is issued when the vehicle speed is a specified value or less.

When the control unit receives an input from a kick down release switch, the control unit may issue a further kick down release command to thereby perform control of releasing the kick down mode and returning the kick down mode to the normal mode.

A preferred embodiment is characterized in that the kick down release switch is a kick down release button that becomes a trigger for outputting the kick down release command, the kick down button being electrically connected to the control unit, and that the kick down release command is issued by the rider pressing the kick down release button.

It is preferable that the kick down release button is arranged at a position to be operated by a thumb of the rider.

A preferred embodiment is characterized in that the control unit has a kick down button as a kick down operating part electrically connected thereto, and that the kick down operation is performed by the rider pressing the kick down button.

The control of shifting the kick down mode to a kick down hold mode of holding the kick down mode for a specified time may be performed by the rider pressing the kick down button further.

It is preferable that the control unit has an electric motor, which moves a moving sheave of a primary sheave in the continuously variable transmission, electrically connected thereto, and that a moving speed of the moving sheave by the electric motor is slower at the time of control of returning the kick down mode to the normal mode than at the time of control of shifting the normal mode to the kick down mode.

A preferred embodiment is characterized in that the straddle type vehicle is a two-wheeled motor vehicle, and that the continuously variable transmission is provided in a power transmission path between an engine of the two-wheeled motor vehicle and a driving wheel.

A speed change control unit of a continuously variable transmission provided in a power transmission path between an engine of a two-wheeled motor vehicle and a driving wheel, characterized by including: a normal mode speed change mechanism that realizes a normal mode of controlling a speed change ratio according to a running condition of the two-wheeled motor vehicle; a kick down command input mechanism that inputs a kick down command manually; a kick down mode speed change mechanism that realizes a kick down mode of shifting a speed change ratio to a lower side than a speed change ratio at the time of the normal mode in response to an input of the kick down command; and a release mechanism that issues a kick down release command by a specified operation or by establishment of a specified condition to release the kick down mode to return the kick down mode to the normal mode.

A preferred embodiment is characterized in that when the kick down speed change means starts performing the kick down mode, the kick down speed change means controls a speed change ratio to a target speed change ratio shifted to a lower side than a speed change ratio at the time of the normal mode, and that when the kick down speed change means achieves the target speed change ratio during performing the kick down mode, the kick down speed change means holds the speed change ratio.

A preferred embodiment is characterized in that the kick down speed change means changes a speed change ratio on the basis of a correction value obtained by shifting a map command value used at the time of the normal mode to a low side of a speed change ratio by a set value.

A preferred embodiment is characterized in that the kick down command input mechanism is arranged on a rider's side and at a position to be operated by a thumb of the rider.

A preferred embodiment is characterized in that the release mechanism is arranged on a rider's side and at a position to be operated by a thumb of the rider.

A preferred embodiment is characterized in that the kick down command input mechanism and the release mechanism are constructed of a same switch and issue the kick down command when the switch is operated to a first position and issue the kick down release command when the switch is operated to a second position.

A preferred embodiment is characterized in that the kick down command input mechanism and the release mechanism are constructed of a same switch and issue the kick down command and the kick down release command alternately every time the switch is operated.

A preferred embodiment is characterized in that the kick down command input mechanism and the release mechanism are constructed of separate switches and give a higher priority to a command by a newest switch operation than to a command by an old switch operation.

A preferred embodiment is characterized in that when the kick down command input mechanism is operated and then a kick down command is inputted again, the kick down mode speed change mechanism changes a speed change ratio to a further lower side of a speed change ratio.

A preferred embodiment is characterized in that when an accelerator position satisfies a specified condition, the release mechanism issues the kick down release command.

A preferred embodiment is characterized in that when the number of revolutions of an engine satisfies a specified condition, the release mechanism issues the kick down release command.

A preferred embodiment is characterized in that when a specified time passes after a kick down command is inputted, the release mechanism issues the kick down release command.

A preferred embodiment is characterized in that when an acceleration of a vehicle satisfies a specified condition, the release mechanism issues the kick down release command.

A preferred embodiment is characterized in that when an operation of braking a vehicle is performed, the release mechanism issues the kick down release command.

A preferred embodiment is characterized in that the release mechanism includes a determination mechanism for outputting a release command when a specified condition is satisfied, and that when at least two of an accelerator position, the number of revolutions of an engine, a braking operation, a period of time that passes after the kick down command is inputted, and an acceleration of a vehicle satisfy specified conditions, the determination mechanism issues the kick down release command.

A preferred embodiment is characterized in that the release mechanism includes a switch for outputting a kick down release command by a rider's operation and a determination mechanism for outputting a release command when a specified condition is satisfied, and that when a kick down release command outputted from the switch is given as the specified condition or when at least two of an accelerator position, the number of revolutions of an engine, a braking operation, a period of time that passes after the kick down command is inputted, and an acceleration of a vehicle satisfy specified conditions, the determination mechanism issues the kick down release command.

### Advantage of the Invention

According to the present invention, in a straddle type vehicle provided with a control unit for electronically controlling the speed change of a continuously variable transmission, the control unit can perform a controlled shift to a kick down mode, and also smoothly return the kick down mode to the normal mode by issuing a kick down release command according to the state of the straddle type vehicle. Thus, the straddle type vehicle can return the kick down mode smoothly to the normal speed change mode. As a result, the straddle type vehicle can improve the riding comfort of a rider.

Moreover, according to the present invention, a speed change ratio is shifted to a lower side than at the time of the normal mode by the input of a kick down command, and hence when a kick down command is inputted at the time of acceleration, the normal mode is forcibly shifted to the kick down mode, whereby an accelerating force is increased. Moreover, when a kick down command is inputted at the time of deceleration, a speed change ratio is shifted to the lower side of a speed change ratio and hence an engine brake effect produced in the case of a manual transmission can be produced. Furthermore, since the kick down mode is released according to a release command and is returned to the normal mode, an appropriate kick down effect according to the intention of a driver can be produced.

Alternatively, according to the present invention, when kick down is performed, a speed change ratio is forcibly shifted down to a specified speed change ratio shifted to the lower side of a speed change ratio than at the time of the normal mode by a specified amount and the specified speed change ratio is held. Thus, a reliable kick down effect can be produced immediately. Moreover, according to the present invention, when a kick down mode is performed, a speed change ratio shifted to the lower side of a speed change ratio than a map command value used at the time of the normal mode by a set amount. Thus, a kick down effect suitable for the running conditions can be produced.

### Brief Description of the Drawings

FIG. 1 is a side view to show the construction of a straddle type vehicle 1 according to an embodiment of the present invention.
FIG. 2 is a block diagram to describe a control device (ECU) 120 and its peripheral construction.
FIG. 3 is a diagram to describe a control method of the control device 120.
FIG. 4 is a side view to show the construction of a two-wheeled motor vehicle 1 according to an embodiment of the present invention.
FIG. 5 is a block diagram to show the construction of a continuously variable transmission for a two-wheeled motor vehicle according to an embodiment of the present invention.
FIGs. 6A and 6B are diagrams of a kick down switch in a continuously variable transmission for a two-wheeled motor vehicle according to an embodiment of the present invention. FIG. 6A is a diagram to show a state where the kick down switch is not yet pressed and FIG. 6B is a diagram to show a state where the kick down switch is pressed.
FIG. 7 is a flow chart to show the contents of a speed change control in a continuously variable transmission for a two-wheeled motor vehicle according to an embodiment of the present invention.
FIGs. 8A and 8B are characteristic graphs at the time of kick down in a continuously variable transmission for a two-wheeled motor vehicle according to an embodiment of the present invention. FIG. 8A is a characteristic diagram at the time of acceleration and FIG. 8B is a characteristic diagram at the time of deceleration.
FIG. 9 is a flow chart to show the flow of processing in a modification according to an embodiment of the present invention.

### Description of Reference Numeral and Signs

1 straddle type vehicle (two-wheeled motor vehicle)
2 rear wheel (driving wheel)
11 belt type transmission
11 continuously variable transmission (belt type continuously variable transmission)
12 primary sheave
12A fixed sheave
12B moving sheave
13 secondary sheave
13A fixed sheave
13B moving sheave
14 belt
15 centrifugal clutch
16 speed reducing mechanism
17 sheave position moving device (electric motor)
18 sheave position detecting device
19 number-of-revolution sensor of sheave
20 number-of-revolution sensor of rear wheel
21 number-of-revolution sensor of engine
22 vehicle speed sensor
23 accelerator position sensor
24 acceleration computing unit
25 kick down switch
27 sensor
31 handlebar
32 grip (left grip)
33 switch box
46 hold mode
100 engine
102 primary shaft
103 secondary shaft
110 vehicle-mounted electric power source
112 electric power supply line
113 diode
114 relay circuit
115 first switch line
116 relay switch
117 switch control element
118 second switch line
119 diode
120 control unit (speed change ratio control unit)
121 lock up circuit
130 main switch

Hereinafter, embodiments according to the present invention will be described with reference to the drawings. In the following drawings, for the sake of simplifying descriptions, the parts denoted by the same reference symbols have the substantially same functions, respectively. The present invention is not limited to the following embodiments.

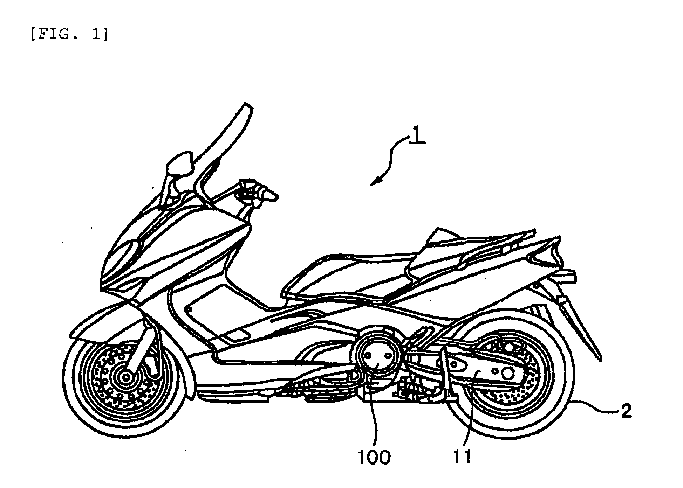

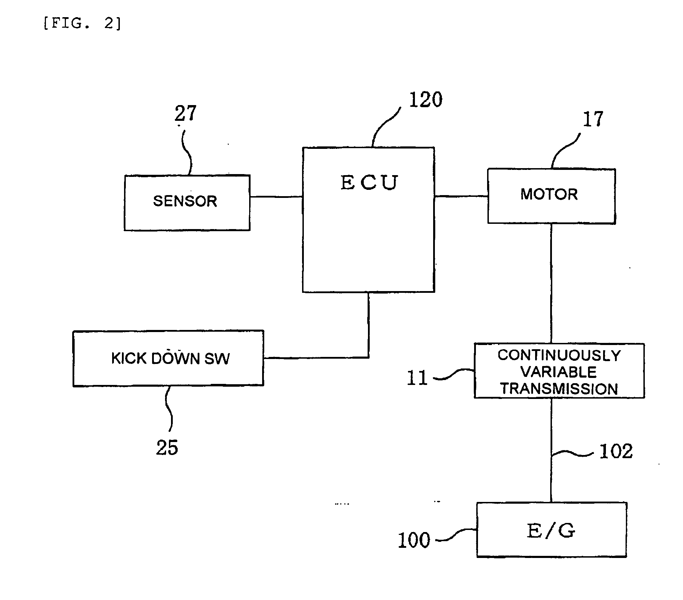

FIG. 1 shows a side construction of a straddle type vehicle 1 according to an embodiment of the present invention. FIG. 2 is a block diagram to describe a control device 120 mounted in the straddle type vehicle 1 according to this embodiment and its peripheral construction.

The straddle type vehicle 1 according to this embodiment is provided with a driving source (engine) 100 having its output controlled according to an accelerator operating part operated by a rider, a continuously variable transmission 11 connected to the engine 100, and a control unit (ECU; electronic control unit) 120 for controlling the continuously variable transmission 11 electronically.

The straddle type vehicle 1 shown in FIG. 1 is a scooter type two-wheeled motor vehicle in which a driving force generated by the engine 100 is transmitted to a rear wheel (driving wheel) 2 via the continuously variable transmission 11. In the case of the two-wheeled motor vehicle 1, the accelerator operating part operated by the rider is an accelerator or an accelerator grip fixed to a handlebar.

The continuously variable transmission 11 of this embodiment is of the type in which a V-belt type automatic continuously variable transmission is electronically controlled and in which the position of a moving sheave (not shown) of a primary sheave in the V-belt type automatic continuously variable transmission 11 is adjusted by a sheave position moving device (in this example, electric motor) 17. The primary sheave having its position adjusted by the electric motor 17 is coupled to a primary shaft 102 (for example, crankshaft) rotated by the engine 100.

The control unit 120, first, can perform the control of shifting to a kick down mode of shifting a speed change ratio to a lower side than a speed change ratio at the time of a normal mode by an operation based on the intention of a rider riding on the straddle type vehicle 1. In other words, the control unit 120 can perform the control of shifting to the kick down mode according to a kick down operating part 25 mounted separately from the accelerator operating part and operated by the rider.

In this embodiment, to the control unit 120 is electrically connected a kick down switch ("kick down SW") 25 as the kick down operating part 25, which becomes a trigger to shift to the kick down mode, and when the rider turns on a kick down switch 25, the rider can perform a kick down operation. The kick down switch 25 is constructed of, for example, a kick down button (KD button) of a button type.

The control unit 120 can issue a kick down release command according to the state of the straddle type vehicle 1, whereby the control of releasing a kick down mode to return the kick down mode to a normal mode can be performed. The state of the straddle type vehicle 1 can be obtained by a sensor 27 electrically connected to the control unit 120. Here, "the state of the straddle type vehicle 1" means the state of a part other than the kick down switch and the sensor 27 for obtaining the state of the straddle type vehicle 1 is, for example, a throttle position sensor (TPS) for detecting the degree of opening of a throttle.

When the sensor 27 is the throttle position sensor, a kick down release command issued according to the state of the straddle type vehicle 1 is issued on the basis of a throttle position signal outputted from the throttle position sensor. Alternatively, when the sensor 27 is a vehicle speed sensor for detecting the vehicle speed of the straddle type vehicle 1, a kick down release command issued according to the state (or running state) of the straddle type vehicle 1 can be issued, for example, when the vehicle speed is a specified value or less.

Here, the sensor 27 may be an accelerator position sensor (APS) for detecting the state of the accelerator operating part. In this case, a kick down release command can be issued on the basis of an accelerator position signal outputted from the accelerator position sensor.

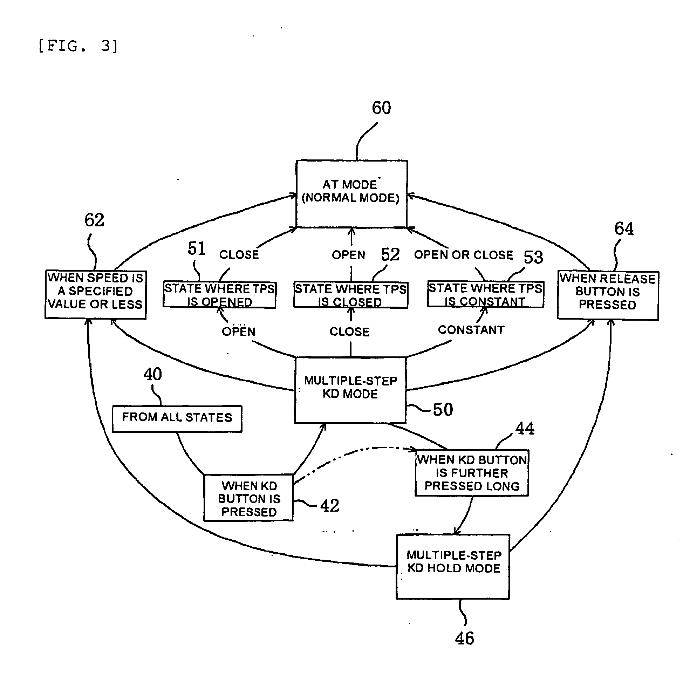

Next, a control method of the control unit 120, that is, a method of switching between a normal mode (AT mode) and a kick down mode (KD mode, or multi-step KD mode) will be described with reference to FIG. 3 in addition.

First, when the rider presses the KD button (25) from any state (40), the rider can shift to the kick down mode (in this example, expressed in "multi-step KD mode") 50. When the sensor 27 for obtaining the running state of the straddle type vehicle 1 is the throttle position sensor (TPS), if a kick down release command is issued on the basis of a throttle position signal (root "51") showing the closed state of a specified time after the open state of a specified time, the continuously variable transmission being engaged in KD mode 50 during passing, for example, can be automatically returned to AT mode (normal mode) 60 after passing ("51"). Here, the specified time has only to be set at an appropriate value.

In addition, for example, a continuously variable transimission in a state where KD mode 50 is being engaged for traveling on slopes may be automatically returned to AT mode (normal mode) 60 by a throttle operation of close → open (route "52"). Alternatively, if the specified time is constant, it is also possible to set the control unit 120 in such a way that the KD mode 50 is automatically returned thereafter to the AT mode (normal mode) 60 by an opening or closing throttle operation (route "53").

Moreover, when the sensor 27 for obtaining the running state of the straddle type vehicle 1 is a vehicle **speed** sensor, it is also possible to adopt a method of setting the control unit 120 in such a way that if the speed of the straddle type vehicle 1 is a specified value or less (route "62"), the continuously variable transmission is automatically returned to the AT mode (normal mode) 60. Here, the specified value can be set in the case where the vehicle speed becomes a certain number % or less or in the case where the vehicle speed becomes a certain number Km/h % or less.

In this regard, a method of returning the continuously variable transmission to the AT mode (normal mode) 60 according to the rider's intention at the time when a release button is pressed can also be adopted in combination with these methods of automatically returning the continuously variable transmission to the AT mode (normal mode) 60 (route "64"). That is, it is also possible to provide a kick down release switch (for example, kick down release button) as a kick down release operating part for issuing a kick down release command and to perform the control of returning the continuously variable transmission to the normal mode 60. Specifically, the kick down operating part (for example, kick down button 25) can be made to double as the kick down release operating part (for example, kick down release button), and the control unit 120 can be constructed so as to perform the following control: that is, normal mode 60 is shifted to kick down mode 50 when the button 25 is pressed once, and kick down mode 50 is returned to normal mode 60 when the button 25 is pressed twice. Alternatively, it is also recommended that a difference in function between the kick down operating part and the kick down release operating part is made by changing the way to press the button 25 (for example, pressing the button 25 for a long time or pressing the button 25 two or more times consecutively). Here, it is also possible to provide a kick down release operating part (for example, kick down release button) separately from the kick down operating part (for example, kick down button 25).

In addition, when the rider wants to continue running in the KD mode, the rider can also perform the control of shifting to a KD hold mode 46, for example, by pressing the KD button for a long time. To return KD hold mode 46 to AT mode (normal mode) 60, it is only necessary to set the control unit 120 in such a way that, for example, when a release button is pressed (route "64") or when a vehicle speed becomes a specified value or less (route "62"), the KD hold mode 46 is returned to the AT mode (normal mode) 60.

According to the straddle type vehicle 1 of the present invention, in the straddle type vehicle 1 provided with the control unit (ECU) 120 for controlling the speed change of the continuously variable transmission 11 electronically, the control unit 120 can perform the control of shifting the continuously variable transmission to the kick down mode (50) by an operation (42) based on a rider's intention and can perform the control of issuing a kick down release command according to the running state of the straddle type vehicle 1 and returning the continuously variable transmission to the normal mode (60), so returning the kick down mode (50) to the normal speed change mode (60) can be performed smoothly. In other words, since the continuously variable transmission can automatically returned to normal speed change mode (60) by the control unit 120, the riding comfort of the rider can be improved in the straddle type vehicle 1 to be returned to the kick down mode (50).

It is preferable to set the control unit 120 in such a way that the moving speed of a moving sheave by the electric motor 17 is made slower at the time of the control of returning the continuously variable transmission to the normal mode (60) than at the time of the control of shifting the continuously variable transmission to the kick down mode (50). The reason for this is as follows: shifting the continuously variable transmission from normal mode (60) to kick down mode (50) is performed by the operation based on the rider's intention and hence the rider can respond to the shifting naturally even if the moving speed is high, whereas returning to the normal mode (60) is automatically performed and hence it results in improving the riding comfort to make the moving speed slower so as to enable the rider to respond to the returning as slowly as possible.

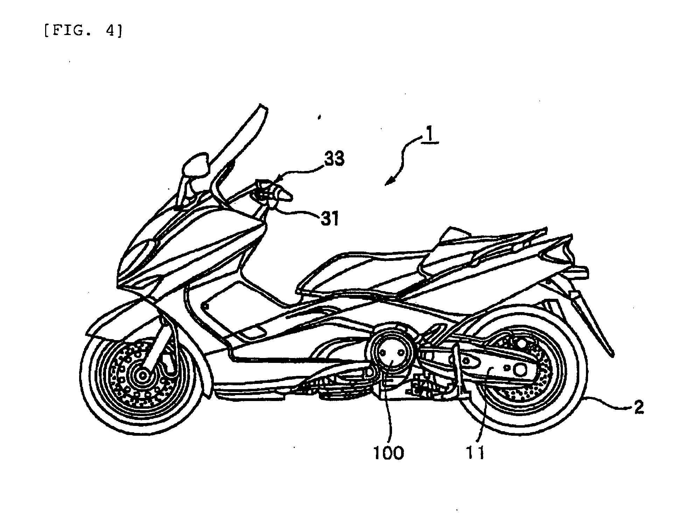

Hereinafter, the construction of the embodiment of the present invention, in particular, a speed change control device of a continuously variable transmission for a two-wheeled motor vehicle will be described with reference to FIG. 4 to FIG. 6.

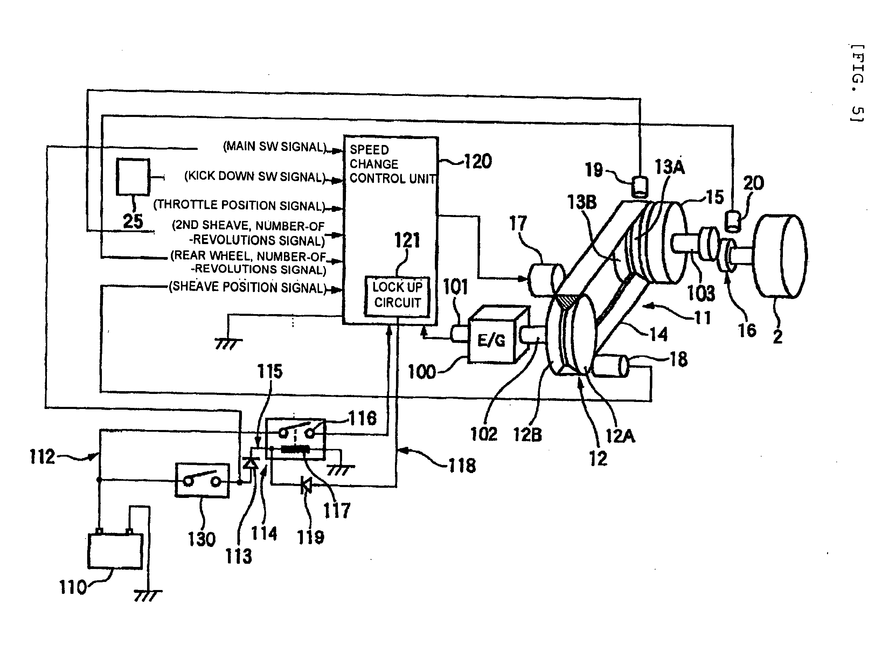

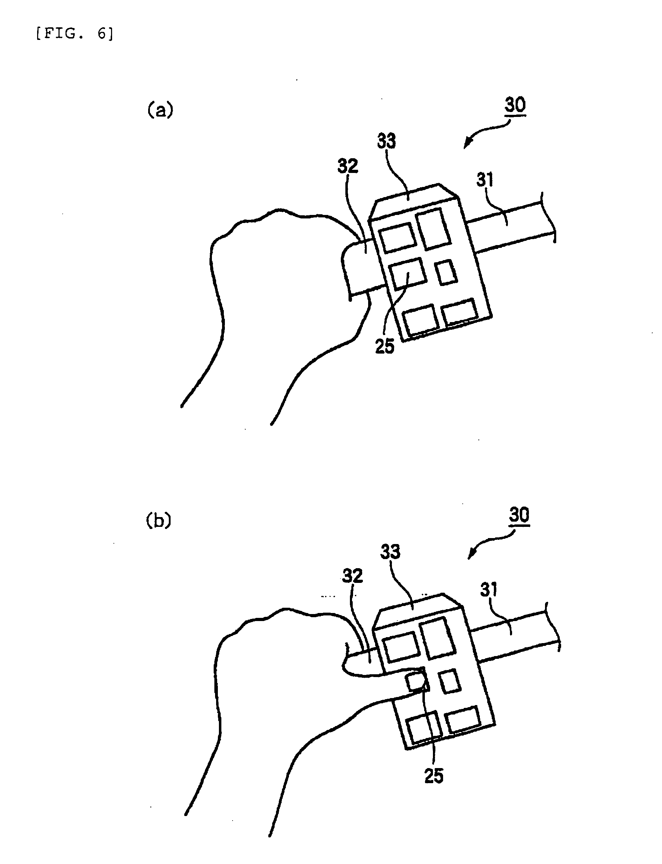

FIG. 4 shows a side construction of a two-wheeled motor vehicle 1 of this embodiment. In this example, a switch box 33 is fixed to the left grip of a handlebar 31 and the kick down switch 25 (refer to FIG. 2) is fixed to this switch box 33. This will be later described in detail (refer to FIG. 6). FIG. 5 is a construction diagram of a speed change control system of a V-belt type continuously variable transmission provided in a power transmission path of the two-wheeled motor vehicle 1.

As shown in FIG. 4 and FIG. 5, the two-wheeled motor vehicle 1 of this embodiment is provided with the V-belt type continuously variable transmission 11 as one of a transmission mechanism for transmitting power from the engine 100.

This V-belt type continuously variable transmission 11 is constructed as follows: a primary sheave 12 is coupled to a primary shaft 102 (for example, crankshaft) rotated by the engine 100; a secondary sheave 13 is coupled to a secondary shaft 103 for outputting power to the rear wheel (driving wheel) 2 via a centrifugal clutch 15 and a speed reducing mechanism 16; and a V-belt 14 is looped over these primary sheave 12 and over the secondary sheave 13.

The primary sheave 12 and the secondary sheave 13 has fixed sheaves 12A, 13A and moving sheaves 12B, 13B, respectively, and a V groove in which the V belt 14 is looped is formed between the fixed sheave 12A and the moving sheave 12B and between the fixed sheave 13A and the moving sheave 13B. The driving force of the engine 100 is converted to the rotational force of the V belt 14 by the primary sheave 12 and the rotational force of the V belt 14 is transmitted to the rear wheel 2 via the secondary sheave 13.

In the V-belt type continuously variable transmission 11 of this embodiment, the moving sheave 12B of the primary sheave 12 is electrically moved in an axial direction to adjust the width of the V groove to change the looping radius for the respective pulleys 12, 13 of the V belt 14, whereby a speed change ratio between both pulleys 12, 13 is adjusted continuously.

The continuously variable transmission 11 is provided with a sheave position moving device (mainly constructed of an electric motor) 17 for adjusting the position of the moving sheave 12B of the primary sheave 12 and a sheave position detecting device (corresponding to a mechanism for detecting an actual speed change ratio) 18 for detecting the position of the moving sheave 12B. In this embodiment, the moving sheave 12B is moved on the basis of the sheave position detected by the sheave position detecting device 18 via the sheave moving device 17 to change the looping radius of the V belt 14 looped over the primary sheave 12.

In this embodiment, a secondary sheave number-of-revolutions sensor 19 for detecting the number of revolutions of the secondary sheave 13 is provided on the upstream side of the centrifugal clutch 15 and a number-of-revolutions sensor 20 for detecting the number of revolutions of the rear wheel 2 directly is provided on the downstream side of the centrifugal clutch 15 and near the rear wheel 2 as detection devices for detecting the vehicle speed of the two-wheeled motor vehicle 1. These sheave number-of-revolutions sensor 19 and the rear wheel number-of-revolutions sensor 20 detect a signal of the number of revolutions proportional to the vehicle speed, respectively. As to these sensors, a construction may be adopted in which only any one of the sensors may be provided.

The two-wheeled motor vehicle 1 of this embodiment is provided with a speed change ratio control unit (control unit) 120 for controlling the speed change ratio of the continuously variable transmission 11 as a central element of a control system.

This speed change ratio control unit 120 is constructed of a microcomputer as a main element. To the speed change ratio control unit 120 are inputted a number-of-revolutions signal outputted from the sheave number-of-revolutions sensor 19 or the rear wheel number-of-revolutions sensor 20, a throttle position signal outputted from a throttle position sensor (not shown), a sheave position signal outputted from the sheave position detecting device 18, and a main switch signal of a main switch 130 for turning on and off the electric power source of the whole of the vehicle.

The speed change ratio control unit 120 controls the whole of the engine 100 and the continuously variable transmission 11 on the basis of various kinds of signals described above. Specifically, the speed change ratio control unit 120 computes a vehicle speed and an acceleration and then finds a target speed change ratio on the basis of the throttle position signal, the number of revolutions of the secondary sheave, the signal of the number of revolutions signal of the driving wheel, and the sheave position signal. The speed change ratio control unit 120 drives the sheave position moving device 17 so as to realize the target speed change ratio to control the position of the moving sheave 12B of the primary sheave 12, that is, to perform the so-called normal speed change control, whereby the actual speed change ratio of the two-wheeled motor vehicle 1 is controlled.

Here, "the normal speed change control" means control that computes a speed change ratio responding to the running conditions of the vehicle (vehicle speed, throttle position, and the like) from a previously registered map and provides a speed change command for realizing this speed change ratio to the continuously variable transmission 11 to thereby realize the speed change ratio finally. The normal speed change control is constructed so as to realize smooth acceleration or deceleration by decreasing a speed change ratio as a vehicle speed and a throttle position becomes larger (controlling speed to a top side) or by increasing a speed change ratio as a vehicle speed and a throttle position becomes smaller (controlling speed to a low side).

The speed change ratio control unit 120 of this embodiment is supplied with electric power through an electric power supply line 112 from a vehicle-mounted electric power source 110. This electric power supply line 112 has a relay circuit 114 having a lock up function.

The relay circuit 114 is provided with a relay switch 116 for controlling electric power supply to the speed change ratio control unit 120 from the vehicle-mounted electric power source 110 and a switch control element 117 for controlling the turning on/off of this relay switch 116. In the relay circuit 114, when a main switch 130 is turned on, a switch starting voltage is applied to the switch control element 117 via a first switch line 115.

When the switch starting voltage is applied to the switch control element 117 from the first switch line 115, the switch control element 117 brings the relay switch 116 to a closed state from an open state to close the electric power supply line 112. With this, electric power is supplied to the speed change ratio control unit 120 from the vehicle-mounted electric power source 110 to bring the speed change ratio control unit 120 into a drivable state. When the speed change ratio control unit 120 is brought to the drivable state, the continuously variable transmission 11, specifically, the sheave position moving device 17 is operated and the speed change ratio control can be realized by controlling the position of the moving sheave 12B.

Moreover, to the relay circuit 114 of this embodiment is connected a second switch line 118 that supplies a switch starting voltage to the switch control element 117 to keep the relay switch 116 in a closed state until a specified condition is established even after the main switch 130 is turned off.

This second switch line 118 is connected to a lock up circuit 121 provided in the speed change ratio control unit 120. The lock up circuit 121 is constructed of, for example, a capacitor, a diode, and the like and is constructed so as to apply voltage to the switch control element 117 via the second switch line 118 of a line separate from the first switch line 115.

Incidentally, the second switch line 118 is provided with a diode 119 for preventing current from flowing to the lock up circuit 121 reversely or for preventing excess current from flowing through the lock up circuit 121 via the second switch line 118 when the switch 130 is turned on/off. Similarly, the first switch line 115 is provided with a diode 113 for preventing the speed change ratio control unit 120 from making an erroneous determination that when the main switch 130 is off, current is passed through the speed change ratio control unit 120 from the second switch line 118 to turn on a main switch signal.

In this embodiment, the lock up circuit 121 of the speed change ratio control unit 120 is constructed in such a way that when voltage supply is started from the vehicle-mounted electric power source 110 via the electric power supply line 112, voltage is supplied to the switch control element 117 via the second switch line 118. That is, in this embodiment, voltage can be supplied to the switch control element 117 from two lines of the first switch line 115 via the switch 130 and the second switch line 118 via the lock up circuit 121. The switch control element 117 is constructed in such a way that when voltage is supplied to the switch control element 117 from either the first switch line 115 or the second switch line 118, the switch control element 117 switches the relay switch 116 from an open state to a closed state and maintains the relay switch 116 in such state, and that only when voltage is not supplied to the switch control element 117 from any of both, the relay switch 116 is switched to the open state from the closed state to interrupt electric power supply to the speed change ratio control unit 120 via the electric power supply line 112.

Further, in this embodiment, when the speed change ratio of the continuously variable transmission 11 is not low or the vehicle speed is not zero at the time of the main switch 130 being turned off, the lock up circuit 121 of the speed change ratio control unit 120 continues supplying voltage to the switch control element 117 via the second switch line 118.

Then, while the switch control element 117 has voltage supplied thereto from the second switch line 118 and the speed change ratio control unit 120 has electric power supplied thereto from the electric power supply line 112, the speed change ratio control unit 120 performs a normal speed change control based on the vehicle speed and the throttle position until the vehicle speed becomes zero even after the main switch 130 is turned off. Then, when the vehicle speed becomes zero, the speed change ratio control unit 120 outputs an electric power cutting command to the lock up circuit 121. The speed change ratio control unit 120 is constructed in such a way that when the electric power cutting command is inputted to the lock up circuit 121 from the speed change ratio control unit 120, the lock up circuit 121 interrupts voltage supply to the switch control element 117 via the second switch line 118 to bring the relay switch 116 to the open state from the closed state, whereby the electric power supply to the speed change ratio control unit 120 from the vehicle-mounted electric power source 110 is interrupted.

Moreover, the two-wheeled motor vehicle 1 of this embodiment is provided with the kick down switch 25. The kick down switch 25, as shown in FIG. 4 and FIG. 6, is mounted in the switch box 33 of the left grip 32 of the handlebar 31 along with the other kinds of switches. They are mounted on the rider's side and on the front side of the rider so as to make it possible for the rider to be able to operate them by the rider's left thumb. Here, as shown in FIG. 6, to facilitate a switch operation by the rider's left thumb, it is desirable that the kick down switch 25 is arranged, for example, at a position of height lower than the center line of the handlebar 31 or the grip 32.

This kick down switch 25 corresponds to a kick down command input mechanism for inputting a kick down command manually and a kick down mode release mechanism. For example, when the kick down switch 25 is pressed (corresponding to a first position operation), a command that switches the continuous variable transmission to kick down mode is outputted to the speed change ratio control unit 120, and when the kick down switch 25 is released (corresponding to a second position operation), a command for releasing the kick down mode and returning the kick down mode to the normal mode (release command) is outputted to the speed change ratio control unit 120.

In the following description, a mode of performing a normal speed change control of controlling a speed change ratio according to a previously registered map in a state where this kick down switch 25 is not operated is referred to as "normal mode" and this function corresponds to a normal mode speed change mechanism. Moreover, the speed change ratio control unit 120 has not only the function of performing a normal mode speed change but also a function that realizes a speed change ratio shifted temporarily to a lower side of a speed change ratio than a speed change ratio at the time of the normal mode in place of the normal mode speed change in response to the input of the kick down command. This mode is referred to as "kick down mode" and this function corresponds to a kick down mode speed change mechanism. That is, the speed change ratio control unit 120 of this embodiment is a circuit realizing the normal mode speed change mechanism and the kick down mode speed change mechanism.

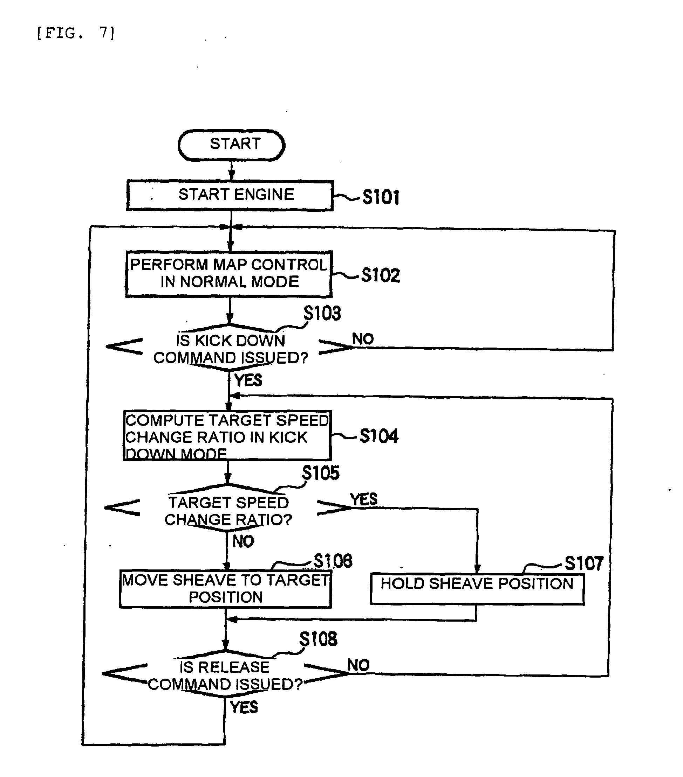

Next, a speed change control flow of the speed change ratio control unit 120 will be described with reference to a flow chart in FIG. 7.

In a speed change control routine shown in FIG. 7, first, when a starter switch (not shown) is operated by the rider and an engine starting signal is inputted to start the engine (step S101), the speed change ratio control unit 120 produces a speed change command for controlling a speed change ratio in the normal mode according to the map registered previously on the basis of a vehicle speed signal outputted from the vehicle speed sensor 22, a signal of the number of revolutions of the engine outputted from the engine number-of-revolutions sensor 21, an accelerator position outputted from the accelerator position sensor 23, and an accelerator signal outputted from the acceleration computing device 24, and outputs the speed change command to the sheave position moving device 17. The sheave position moving device 17 moves the position of the moving sheave 12B according to this speed change command to perform a speed change ratio control responsive to the map (step S102).

Next, in step S103, it is determined whether or not a kick down command is inputted by the kick down switch 25 being operated. Here, if a kick down command is not inputted by the kick down switch 25 being operated, the routine returns to step S102 where the speed change ratio control in the normal mode is continued.

By contrast, when the kick down switch 25 is pressed, the continuously variable transmission is shifted to kick down mode, that is, the speed change ratio control shown in the following steps S104 to S108 is performed.

First, in step S104, the speed change ratio control unit 120 finds a target speed change ratio on the low side of the speed change ratio on the basis of a vehicle speed, the number of revolutions of the engine, and an accelerator position at the present moment and computes the amount of movement of the sheave to achieve the target speed change ratio. This target speed change ratio may be a fixed ratio changed by a specified amount from the speed change ratio at the present moment or may be a ratio changed gradually according to the vehicle speed, the number of revolutions of the engine, and the accelerator position at the respective moments. Here, when the number of revolutions of the engine becomes larger than a revolution limit (upper limit of the number of revolutions of the engine) at the time of achieving the target speed change, a correction is made to the target speed change ratio so as to prevent the number of revolutions of the engine from exceeding the revolution limit. When the target speed change ratio is determined, it is checked whether or not the speed change ratio at the present moment is the target speed change ratio (step S105). If the speed change ratio at the present moment is not the target speed change, the moving sheave 12B is moved to a target position (step S106), whereas if the speed change ratio at the present moment is the target speed change ratio, the position of the moving sheave 12B is held at the present position (step S107).

Next, the speed change ratio control unit 120 checks whether or not a release command is inputted (step S108). If a release command is inputted, the routine returns to step S102 where the kick down mode is shifted to the normal mode to perform the map control in the normal mode again. In contrast, if a release command is not inputted, the routine returns again to step S104 where a target speed change ratio is computed according to the vehicle speed, the number of revolutions of the engine, and the accelerator position at the present moment and continues control in the kick down mode.

As described above, in this embodiment, according to the operation of the kick down switch 25, the speed change ratio is forcibly shifted to the lower side of the speed change ratio than in the normal mode. Thus, when the kick down switch 25 is operated at the time of acceleration, a forcible kick down is performed to enhance an accelerating force, whereas when the kick down switch 25 is operated at the time of deceleration, the speed change ratio is forcibly shifted to the low side of the speed change ratio to produce such an engine brake effect that is produced in the case of an AT transmission.

Moreover, in this embodiment, the kick down mode is returned to the normal mode by a release command issued when the kick down switch 25 is released, so an appropriate kick down effect responsive to the intention of the driver can be produced. For example, it is possible for the driver to use the kick down switch 25 in the following manner: when passing a vehicle running ahead, the driver presses the kick down switch 25 to accelerate his vehicle in a kick down mode and moves his finger off the kick down switch 25 after passing the target vehicle to return the kick down mode to the normal mode. That is, the driver can switch the mode simply and clearly by the operation of a single finger and can reflect the intention of the driver easily. Moreover, since the kick down mode can be set and released by the same kick down switch 25, there is also provided the merit of simplifying the operation and the device.

Moreover, as to the construction of the kick down switch 25, for example, if the kick down switch 25 is constructed in such a way that when the kick down switch 25 is pressed (when the kick down switch is operated to the first position), the kick down mode is set and that when the kick down switch 25 is released (when the kick down switch is operated to the second position), the kick down mode is released, when the driver passes a vehicle ahead of him, the driver can press the kick down switch 25 to accelerate the vehicle in the kick down mode and can move his finger off the kick down switch 25 to return the kick down mode to the normal mode after passing the target vehicle. In this case, the switching of mode can be readily and precisely performed with a single finger and hence can reflect the intention of the driver easily.

Moreover, according to this embodiment, if the kick down switch 25 is constructed in such a way that when the kick down switch 25 is pressed once, the kick down mode is set and that when the kick down switch 25 is pressed once more, the kick down mode is released (in other words, the kick down switch 25 is ON when the button is pressed once and OFF when pressed twice), when passing a vehicle ahead, first, the driver can press the kick down switch 25 to accelerate the vehicle in the kick down mode, and when the driver passes the target vehicle, the driver can press the kick down switch 25 once more to return the kick down mode to the normal mode. In this case, the switching of the mode can be readily and precisely performed with a single finger and hence reflect the intention of the driver easily. In addition, since the kick down mode can be locked up (fixed to the low side of the speed change ratio) by pressing the button once, operability can be improved particularly in the case of continuing accelerating the vehicle for a long time, for example, in the case of running on a mountain pass.

Incidentally, in the above-mentioned embodiment has been shown a case where the speed change ratio is changed to the low side of the speed change ratio during performing the kick down mode. However, the speed change ratio may be changed during the kick down mode on the basis of a correction value obtained by shifting a map command value used at the time of the normal mode to the low side of the speed change ratio by a set amount. With this construction like this, a kick down effect responsive to and appropriate for the running conditions can be produced irrespective of the kick down mode being performed.

Moreover, a difference in the pattern of change of the speed change ratio may be caused between at the time of acceleration and at the time of deceleration in the kick down mode.

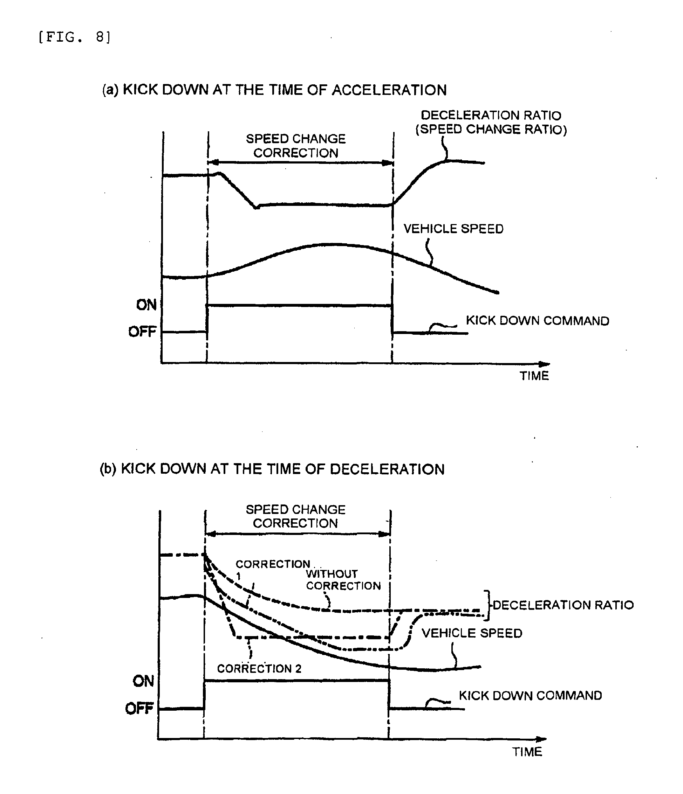

FIGs. 8A and 8B show the relationship between the speed change ratio and the vehicle speed at the time of kick down mode. FIG. 8A shows an example of a speed change correction (correction of the speed change ratio by the kick down) appropriately performed at the time of acceleration and FIG. 8B shows an example of a speed change correction (correction of the speed change ratio by the kick down) appropriately performed at the time of deceleration.

At the time of acceleration, as shown in FIG. 8A, it is preferable that a speed change ratio is shifted to the low side by a specified amount and is held there according to the occurrence of a kick down command and that when acceleration is achieved and the kick down command is released, the continuously variable transmission is returned to normal mode. With this change, an acceleration response in the kick down mode becomes the same as in the case of a kick down operation in an AT vehicle and in the case of realizing acceleration by a shift down in a manual transmission vehicle and hence the driver can operate the kick down switch 25 without feeling uncomfortable.

Moreover, at the time of deceleration, as shown by a correction 2 in FIG. 8B, it is also possible to perform a speed change control that shifts a speed change ratio to the low side by a specified amount and holds the speed change ratio according to the occurrence of a kick down command and returns the continuously variable transmission to normal mode when the deceleration is achieved and the kick down command is released. In addition, as shown by a correction 1, it is also possible to perform a speed change control that shifts a speed change ratio on the basis of a correction value obtained by shifting a map command value (shown as a value without correction) used at the time of the normal mode by a set amount according to the occurrence of a kick down command and then returns the kick down mode to the normal mode when the deceleration is achieved and the kick down command is released.

It is thought that at the time of deceleration, a shock caused at the time of speed change becomes smaller in the case of the correction 1 than in the case of the correction 2. Which pattern of the correction 1 and the correction 2 is used for changing a speed change ratio becomes a factor in making a large change in the riding comfortable of a two-wheeled motor vehicle. Thus, it is recommended to set the correction 1 or the correction 2 in consideration of a rider's idea for each kind of the vehicle.

In either of the kick down controls at the time of acceleration and at the time of deceleration, shifting from the speed change ratio of the normal mode to the speed change ratio on the low side of the speed change ratio (kick down speed change ratio) and shifting from the speed change ratio on the low speed side (kick down speed change ratio) to the speed change ratio of the normal mode may be performed quickly to some extent, but are preferably performed as continuously and gently as possible from the viewpoint of avoiding the rider from feeling a speed change shock.

Moreover, in the above-mentioned embodiment has been shown an example in which when the kick down switch 25 is pressed, a kick down command is issued and in which when the kick down switch 25 is released, a release command is issued. However, it is also possible to construct the speed change ratio control in such a way that when the kick down switch 25 is pressed once, a kick down command is issued, and that when the kick down switch 25 is released, a release command is not issued, and that when the kick down switch **25** is pressed once more, a release command is issued. That is, it is also possible to construct the speed change ratio control in such a way that every time the kick down switch 25 is pressed, a kick down command and a kick down release command are alternately issued.

In this case, the following scene can be thought. The driver can use the kick down switch 25 in the following manner: when passing a vehicle running ahead, first, the driver presses the kick down switch 25 to accelerate his vehicle at full acceleration in the kick down mode; then, when the driver passes the target vehicle, the driver presses the kick down switch 25 once more to return to the normal mode. In this case, the switching of the mode can be readily and precisely performed with a single finger, **and hence** can reflect the intention of the driver easily by a simple operation. In addition, when the driver presses the button once, the kick down mode is locked up (a speed change ratio is changed to a speed change ratio on the low side of the speed change ratio). Thus, in the case of continuing accelerating the vehicle for a long time in a state where the road has many curves, for example, in the case of running the vehicle on a mountain pass, the driver can hold the kick down mode without concentrating on the kick down switch 25. Therefore, the drivability of the two-wheeled motor vehicle 1 can be improved.

Moreover, it is also recommended to provide a switch for issuing a kick down command and a switch for issuing a kick down release command separately from each other and to give a higher priority to a command issued by the newest switch operation than a command issued by an old switch operation. Specifically, it is possible to use the switches as follows: when the driver passes a vehicle running ahead of him, first, the driver presses the switch on a setting side to accelerate his vehicle in the kick down mode; then, when the driver passes the target vehicle, the driver operates the switch on a releasing side to return the continuously variable transmission to the normal mode.

In this manner, by constructing the speed change ratio control in such a way that the kick down mode is set and released by separate switches, the error of a mode switching operation can be reduced. In this regard, when both of the switches are arranged at positions where the driver can operate the switches by a single finger, the switching of the mode can be readily and precisely performed with a single finger and hence can reflect the intention of the driver easily. Moreover, the switch on the kick down mode setting side is provided separately from the switch on the releasing side and hence, for example, by adopting a construction in which the button switch is pressed in two steps, the control of increasing the amount of kick down achieved by a first step pressing by a second step pressing can be realized.

### (Modification relating to kick down mode release)

Moreover, means for issuing a release command is not particularly limited to a kick down switch but it is also recommended that the speed change ratio control unit 120 be provided with a determination mechanism for issuing a release command when a specified condition is established to release the kick down mode to return the kick down mode to the normal mode. Hereinafter, other examples will be described.

As a first example, it can be thought to employ means for issuing a release command when an accelerator position satisfies a specified condition. With this, the kick down mode can be automatically released according to the accelerator position, so a special release operation is not necessary. Thus, after a rider sets a kick down mode, the rider can concentrate on operating an accelerator.

Examples of release conditions in this case include:
(a) to release when an accelerator position becomes smaller than a specified amount;
(b) to release when an accelerator position returns to a position at the time of setting a kick down mode; and
(c) to release when an accelerator position is within a specified range for a specified time.

For example, in a construction adopting (a), when passing a vehicle ahead of him, first, the driver sets a kick down mode and starts accelerating the vehicle at a full-opened accelerator position and can return the continuously variable transmission to the normal mode only by returning an accelerator at the time of passing the vehicle. Thus, the vehicle can run in reflection of the driver's intention at the moment when the driver wants to accelerate.

As a second example, it can be thought to employ means for issuing a release command when the number of revolutions of the engine satisfies a specified condition. In this example, it is possible to set the means in such a way that, for example, when the number of revolutions of the engine becomes larger than a specified amount, the kick down mode can be automatically released. Then, when an accelerator is fully opened in the kick down mode to start to accelerate and then the number of revolutions of the engine reaches a limit value, it is possible to determine that acceleration is impossible and to return the kick down mode to the normal mode. Thus, it is possible to reduce useless running in the kick down mode.

As a third example, it can be thought to employ means for issuing a release command when a specified time passes after a kick down command is inputted. In this example, when a specified time passes after a kick down command is inputted, the continuously variable transmission is automatically returned to the normal mode. Thus, for example, after a kick down mode is being set to exert an engine brake at the time of running on a mountain pass from a down slope, it is possible to prevent the driver from forgetting about returning the kick down mode to the normal mode.

As a fourth example, it can be thought to employ means for issuing a release command when the acceleration of a vehicle satisfies a specified condition. In this example, it is possible to set the means in such a way that, for example, when the acceleration of a vehicle becomes lower than a specified amount, the kick down mode can be automatically released. Then, the continuously variable transmission can be automatically returned to the normal mode according to the actual state of the vehicle reflecting the acceleration intention of the driver. Thus, it is possible to prevent the driver from forgetting about returning the kick down mode to the normal mode by driver's carelessness.

As a fifth example, it can be thought to employ means for issuing a release command when the operation of braking a vehicle is performed. In this example, even if a vehicle is accelerated by setting a kick down mode, when a braking operation is performed thereafter, the kick down mode can be automatically released. Thus, it is possible to release the kick down mode in reflection of the clear indication of intention of the driver.

Moreover, the speed change ratio control unit 120 may perform the control of issuing a release command when at least two or more of the specified conditions of the accelerator position, the number of revolutions of the engine, the elapse of time, the acceleration of the vehicle, and the presence or absence of braking operation, which are described above, and the operation of the kick down switch 25 are satisfied.

Moreover, the speed change ratio control unit 120 may perform the control of issuing a release command, not depending on the operation of the kick down switch 25, but when at least two or more of the specified conditions of the accelerator position, the number of revolutions of the engine, the elapse of time, the acceleration of the vehicle, and the presence or absence of a braking operation, which are described above, are satisfied. In this case, the following control may be performed: that is, even if two or more of the above-mentioned conditions are not satisfied, when the kick down switch 25 is operated, a higher priority is given to a release command from the kick down switch 25 and the continuously variable transmission is switched to the normal mode.

In this manner, when the speed change ratio control unit 120 performs the control of issuing a release command if at least two or more of the specified conditions of the accelerator position, the number of revolutions of the engine, the elapse of time, the acceleration of the vehicle, and the presence or absence of a braking operation are satisfied, the object of accelerating or decelerating the two-wheeled motor vehicle 1 can achieved by making a detailed determination of the conditions of the two-wheeled motor vehicle 1 in a comprehensive manner. Moreover, when a manual input for releasing by the kick down switch 25 is done, the intention of the rider can be reflected clearly by giving a higher priority to this manual input and releasing the kick down mode.

### (Modification of kick down mode)

The speed change ratio control unit 120 of the two-wheeled motor vehicle 1 of this embodiment can be also constructed in such a way that, as a modification of the kick down mode, to enhance the accelerating force or decelerating force of the two-wheeled motor vehicle 1, the kick down operation is performed twice. In this case, for example, by employing a construction in which a switch on a kick down mode setting side is provided independently of a switch on a releasing side and in which the button switch is pressed twice, the control of increasing the amount of kick down, which is achieved by the first pressing, further by the second pressing is performed.

Specifically, when the kick down switch 25 is pressed once to shift from normal mode to kick down mode and then is pressed again to input a kick down command to the speed change ratio control unit 120, the speed change ratio control unit 120 performs the control of driving the sheave moving device 17 to move the position of the moving sheave 12B of the primary sheave 12 to change a speed change ratio further to the low side of the speed change ratio. That is, in this modification is performed the control that performs kick down further during performing kick down in the kick down mode to change a speed change ratio further to the low side of the speed change ratio.

This kick down performed further in the kick down mode can be applied to a case where, for example, to exert engine brake on a down slope such as a mountain pass, a rider shifts the continuously variable transmission to the kick down mode and then wants to exert stronger engine brake because a corner is sharper than the rider expects and hence an entry speed to the corner becomes higher than the rider expects.

In a change in the speed change ratio at the time of second kick down in this kick down mode, the amount of movement of the moving sheave 12B may be equal to the amount of movement of the moving sheave 12B at the time of first kick down from the normal mode to the kick down mode or may be smaller than the amount of movement of the moving sheave 12B at the time of first kick down.

Moreover, a kick down mode release after performing the second kick down may be controlled in such a way that a state at the time of the second kick down is returned to a state at the time of the first kick down to continue the kick down mode, or that the kick down mode is returned to the normal mode in one stroke. Here, when the control of returning the kick down mode to the normal mode in one stroke is performed, there are cases where the engine brake is not exerted suddenly or where transmission torque becomes small, it is preferable that only when the kick down switch 25 is operated by the operation of the rider, the kick down mode is returned to the normal mode in one stroke.

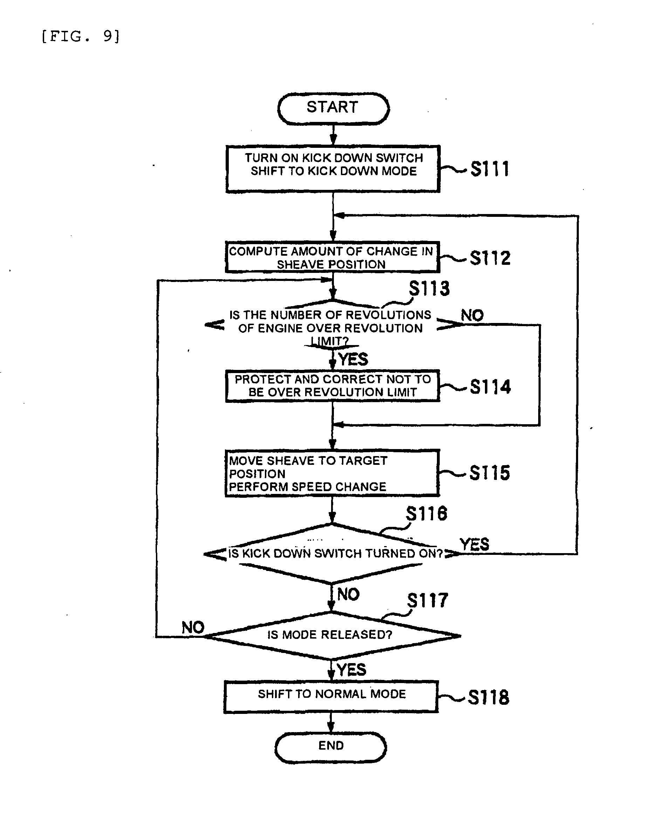

FIG. 9 is a flow chart to show the flow of processing in this modification.

Hereinafter, the flow of processing in this modification will be specifically described with reference to FIG. 9.

First, in the normal mode, when the kick down switch 25 is pressed by the operation of the rider, a kick down command is inputted to the speed change ratio control unit 120 from the kick down switch 25 and the speed change ratio control unit 120 shifts the continuously variable transmission to the kick down mode according to this kick down command (step S111).

When in kick down mode, the speed change ratio control unit 120 computes the amount of movement of the sheave to achieve a target speed change ratio on the lower side than the present speed change ratio (step S112). At this time, it is determined previously by computation whether or not the number of revolutions of the engine when the target speed change ratio is achieved is larger than a revolution limit (upper limit of the number of revolutions of the engine) (step S113). If the number of revolutions of the engine is larger than the revolution limit, the routine proceeds to step S114 where the amount of movement of the sheave is corrected so as to make the target speed change ratio another target speed change ratio not to exceed the revolution limit and then the routine proceeds to step S115. In contrast, if the number of revolutions of the engine is not larger than the revolution limit in step S113, step S114 is skipped and the routine proceeds to step S115.

In step S115, the speed change ratio control unit 120 makes the sheave moving device 17 move the moving sheave 12B on the basis of the amount of movement of the sheave found in step S112 or step S114. With this, the looping radius of the V belt 14 with respect to the primary sheave 12 is changed, whereby the speed change ratio is changed to the low side of the speed change ratio.

Thereafter, it is determined in step S117 whether or not the kick down switch 25 is again operated by the rider. If it is determined in step S117 that the kick down switch 25 is again operated by the rider, the routine returns to step S112 where a sheave position to change a speed change ratio further to the low side is found and the amount of movement of the sheave is computed and then operations in step S113 to step S115 are performed repeatedly.

Next, the speed change ratio control unit 120 checks whether or not a release command is inputted (step S117). If a release command is inputted, the routine proceeds to step S118 where the kick down mode is shifted to the normal mode and a map control in the normal mode is performed again. By contrast, if a release command is not inputted, the speed change ratio control unit 120 continues performing again the control in the kick down mode responding to the target speed change ratio.

As described above, the modification of this embodiment is constructed in such a way that when the kick down switch 25 is operated in the kick down mode to change the speed change ratio to the low side, the speed change ratio is further changed to the low side. Thus, even when the rider feels that an accelerating force or a decelerating force is insufficient in the kick down mode, the rider can enhance the accelerating force or the decelerating force by one button operation. Therefore, even when a high level of speed change operation is to be performed, for example, on a mountain pass, a speed change operation can be easily performed and hence ensuring smooth riding.

Incidentally, the two-wheeled motor vehicle 1 shown in FIG. 1 is a scooter type two-wheeled motor vehicle but the two-wheeled motor vehicle is not limited to this. If a two-wheeled motor vehicle is provided with a control unit for controlling the speed change of a continuously variable transmission electronically, the present invention can be applied to the two-wheeled motor vehicle. Here, "two-wheeled motor vehicle" in the specification of this application means a motorcycle and includes a bicycle mounted with an engine (motorbike) and a scooter, specifically, means a vehicle that can turn with a vehicle body inclined. Therefore, even if a vehicle has two wheels for at least one of a front wheel and a rear wheel and has three or four (or more) tires when counting the number of tires, the vehicle is included in the "two-wheeled motor vehicle". Moreover, the present can be applied not only to the two-wheeled motor vehicle but also to other vehicles utilizing the effect of the present invention. The present invention can applied to the so-called straddle type vehicle including a four-wheeled buggy (ATV: All Terrain Vehicle) and a snowmobile in addition to the two-wheeled motor vehicle. Here, in the case of the four-wheeled buggy and the like, the accelerator operating part can be not only a member of an accelerator grip type but also a member of a lever type. In addition, while the engine of the internal combustion engine is used as a driving source 100, the straddle type vehicle may use a motor as the driving source 100.

Up to this point, the present invention has been described by the preferred embodiment. However, the present invention is not limited to this description but, of course, can be variously modified.

### Industrial Applicability

According to the present invention, it is possible to provide a straddle type vehicle provided with a control unit for improving the riding comfort of a rider and for electronically controlling speed change of a continuously variable transmission.

## Claims

1. Method to control a speed change of a continuously variable transmission mounted in a straddle-type vehicle, said continuously variable transmission being provided in a power transmission path between a driving source and a driving wheel, comprising the steps of:
performing the control of shifting to a kick down mode (50) of shifting a speed change ratio to a lower side than a speed change ratio at the time of a normal mode (60) based on a kick down command by a signal of a kick down operating part provided separately from an accelerator operating part and operated (42) by the rider;
detecting the state of the straddle-type vehicle (1) other than the kick down operating part;
issuing a kick down release command according to the detected state; and
performing the control of releasing the kick down mode and returning the kick down mode to the normal mode (60).

2. Method according to claim 1, wherein in the kick down mode the speed change ratio is shifted down to a specified speed change ratio, which is shifted to the lower side of a speed change ratio during normal mode by a specified amount, and wherein said specified ratio is held.

3. Method according to claim 1 or 2, wherein the kick down release command is automatically issued on the basis of a throttle position, or a vehicle speed, or an accelerator position, or wherein the kick down release command is issued based on an operation of a rider.

4. Straddle type vehicle comprising:
a driving source of which an output being controlled according to an accelerator operating part which a rider operates;
a continuously variable transmission connected to the driving source; and
a control unit electronically controlling the continuously variable transmission,
wherein the control unit is configured to perform control of shifting to a kick down mode, which shifts a speed change ratio to a lower side than a speed change ratio during a normal mode, according to a kick down command by a kick down operating part, operable by a rider and which is provided separately from the accelerator operating part, and is configured to detect a state of the straddle type vehicle other than the kick down operating part and to issue a kick down release command according to the state, to release the kick down mode and to return to the normal mode.

5. Straddle-type vehicle according to claim 4, wherein the control unit is electronically connected to a throttle position sensor, which detects a degree of opening of a throttle, and wherein the kick down release command issued according to the state of the straddle type vehicle is issued based on a throttle position signal outputted from the throttle position sensor.

6. Straddle-type vehicle according to claim 5, wherein the kick down release command is issued based on the throttle position signal showing a closed state for a specified time after an open state for a specified time.

7. Straddle-type vehicle according to one of the claims 4 to 6, wherein the control unit is electronically connected to an accelerator position sensor, which detects a state of the accelerator operating part, and wherein the kick down release command issued according to the state of the straddle type vehicle is issued based on an accelerator position signal outputted from the accelerator position sensor.

8. Straddle-type vehicle according to one of the claims 4 to 7, wherein the control unit is electronically connected to a vehicle speed sensor, which detects a vehicle speed of the straddle type vehicle, and wherein the kick down release command issued according to a running state of the straddle type vehicle is issued when the vehicle speed is a specified value or less.

9. Straddle-type vehicle according to one of the claims 4 to 8, wherein the control unit issues a kick down release command according to an input of a kick down release switch, and thereby performs control of releasing the kick down mode and returning to the normal mode.

10. Straddle-type vehicle according to claim 9, wherein the kick down release switch is a kick down release button serving as a trigger for outputting the kick down release command, the kick down release button being electrically connected to the control unit, and wherein the kick down release command is issued when the rider presses the kick down release button.

11. Straddle type vehicle according to claim 10, wherein the kick down release button is arranged at a position that can be operated by a thumb of the rider.

12. Straddle-type vehicle according to one of the claims 4 to 11, wherein the control unit is electronically connected to a kick down button serving as a kick down operating part, and wherein the kick down operation is performed by the rider pressing the kick down button.

13. Straddle-type vehicle according to claim 12, wherein control of shifting to a kick down hold mode, which holds the kick down mode for a specified time, is performed by further pressing the kick down button.

14. Straddle-type vehicle according to one of the claims 4 to 13, wherein the control unit is electronically connected to an electric motor, which moves a moving sheave of a primary sheave in the continuously variable transmission, and wherein a moving speed of the moving sheave according to the electric motor is slower at the time of control of returning to the normal mode than at the time of control of shifting to the kick down mode.

15. Straddle-type vehicle according to one of the claims 4 to 14, wherein the straddle type vehicle is a two-wheeled motor vehicle, and wherein the continuously variable transmission is provided in a power transmission path between an engine of the two-wheeled motor vehicle and a driving wheel.

16. Speed change control unit of a continuously variable transmission provided in a power transmission path between an engine of a two-wheeled motor vehicle and a driving wheel comprising:
a normal mode speed change mechanism achieving a normal mode of controlling a speed change ratio according to a running condition of the two-wheeled motor vehicle;
a kick down command input mechanism inputting a kick down command manually;
a kick down mode speed change mechanism achieving a kick down mode of shifting a speed change ratio to a lower side than a speed change ratio at the time of the normal mode in response to an input of the kick down command; and
a release mechanism issuing a kick down release command according to an establishment of a specified condition of the vehicle other than the kick down command input mechanism to release the kick down mode and thereby returning to the normal mode.

17. Speed change control unit of a continuously variable transmission according to claim 16, wherein the kick down speed change means controls a speed change ratio to a target speed change ratio shifted to a lower side than a speed change ratio at the time of the normal mode, when an execution of the kick down mode begins, and maintains the speed change ratio, when the target speed change ratio is achieved during the execution of the kick down mode.

18. Speed change control unit of a continuously variable transmission according to claim 17, wherein, during the execution of the kick down mode, the kick down speed change means changes a speed change ratio based on a correction value obtained by shifting a map command value used at the time of the normal mode to a low side of a speed change ratio by a set value.

19. Speed change control unit of a continuously variable transmission according to one of the claims 16 to 18, wherein the kick down command input mechanism is arranged on a rider's side and at a position that can be operated by a thumb of the rider.

20. Speed change control unit of a continuously variable transmission according to one of the claims 16 to 19, wherein the release mechanism is arranged on a rider's side and at a position that can be operated by a thumb of the rider.

21. Speed change control unit of a continuously variable transmission according to one of the claims 16 to 20, wherein the kick down command input mechanism and the release mechanism have a same switch, and the kick down command is issued when the switch is operated to a first position and the kick down release command is issued when the switch is operated to a second position.

22. Speed change control unit of a continuously variable transmission according to one of the claims 16 to 20, wherein the kick down command input mechanism and the release mechanism have a same switch, and the kick down command and the kick down release command are alternately issued each time the switch is operated.

23. Speed change control unit of a continuously variable transmission according to one of the claims 16 to 20, wherein the kick down command input mechanism and the release mechanism have separate switches, and a higher priority is given to a command issued by a later switch operation than to a command issued by a preceding switch operation.

24. Speed change control unit of a continuously variable transmission according to one of the claims 16 to 20, wherein, when a kick down command is inputted again after the kick down command input mechanism is operated, the kick down mode speed change mechanism further changes a speed change to a lower side of a speed change ratio.

25. Speed change control unit of a continuously variable transmission according to one of the claims 16 to 18, wherein, when an accelerator position satisfies a specified condition, the release mechanism issues the kick down release command.

26. Speed change control unit of a continuously variable transmission according to one of the claims 16 to 18, wherein, when the number of revolutions of an engine satisfies a specified condition, the release mechanism issues the kick down release command.

27. Speed change control unit of a continuously variable transmission according to one of the claims 16 to 18, wherein, when a specified time passes after a kick down command is inputted, the release mechanism issues the kick down release command.

28. Speed change control unit of a continuously variable transmission according to one of the claims 16 to 18, wherein, when an acceleration of a vehicle satisfies a specified condition, the release mechanism issues the kick down release command.

29. Speed change control unit of a continuously variable transmission according to one of claims the 16 to 18, wherein, when an operation of braking a vehicle is performed, the release mechanism issues the kick down release command.

30. Speed change control unit of a continuously variable transmission according to one of the claims 16 to 18, wherein the release mechanism includes a determination mechanism outputting a release command when a specified condition is satisfied, and wherein, when at least two of the specified conditions of an accelerator position, the number of revolutions of an engine, a braking operation, a period of time that passes after the kick down command is inputted, and an acceleration of a vehicle are satisfied, the determination mechanism issues the kick down release command.

31. Speed change control unit of a continuously variable transmission according to one of the claims 16 to 20, wherein the release mechanism includes a switch outputting a kick down release command according to a rider's operation, and a determination mechanism outputting a release command when a specified condition is satisfied, and wherein, when a kick down release command outputted from the switch is given as the specified condition or when at least two of the specified conditions of an accelerator position, the number of revolutions of an engine, a braking operation, a period of time that passes after the kick down command is inputted, and an acceleration of a vehicle are satisfied, the determination mechanism issues the kick down release command.

## Patentansprüche

1. Verfahren zur Steuerung einer Geschwindigkeitsänderung eines kontinuierlich variablen Getriebes, montiert in einem Fahrzeug vom Spreiz-Sitz-Typ, dieses kontinuierlich variable Getriebe ist in einem Leistungs-Übertragungspfad zwischen einer Antriebsquelle und einem abgetriebenen Rad vorgesehen, mit den Schritten:
Ausführen der Steuerung des Schaltens in einen Kick-Down-Modus (50) des Schaltens eines Geschwindigkeit-Änderungsverhältnisses zu einer niedrigen Seite als das Geschwindigkeit-Änderungsverhältnis zu dem Zeitpunkt eines Normal-Modus (60) aufgrund eines Kick-Down-Befehls durch ein Signal eines Kick-Down-Betriebsteils, vorgesehen getrennt von einem Beschleuniger-Betriebsteil und Betrieben (42) durch den Fahrer;
Erfassen des Zustand des Fahrzeugs vom Spreiz-Sitz-Typ (1) anders als der Kick-Down-Betriebsteil;
Ausgeben eines Kick-Down-Löse-Befehls gemäß dem erfassten Zustand; und
Ausführen der Steuerung des Lösens des Kick-Down-Modus und Zurückkehren des Kick-Down-Modus zu dem Normal-Modus (60).

2. Verfahren gemäß Anspruch 1, wobei in dem Kick-Down-Modus das Geschwindigkeit-Änderungsverhältnis heruntergeschaltet ist zu einem bestimmten Geschwindigkeit-Änderungsverhältnis, das zu einer niedrigeren Seite des Geschwindigkeit-Änderungsverhältnisses während des Normal-Modus durch einen bestimmten Betrag geschaltet ist und wobei dieses bestimmte Verhältnis gehalten ist.

3. Verfahren gemäß Anspruch 1 oder 2, wobei der Kick-Down-Löse-Befehl automatisch aufgrund einer Drossel-Position, oder einer Fahrzeuggeschwindigkeit, oder einer Beschleuniger-Position ausgegeben ist, oder wobei der Kick-Down-Löse-Befehl aufgrund einer Betätigung des Fahrers ausgegeben ist.

4. Fahrzeug vom Spreiz-Sitz-Typ mit:
einer Antriebsquelle, bei der eine Ausgabe gemäß einem Beschleuniger-Betriebsteil, den ein Fahrer betriebt, gesteuert wird;
ein kontinuierlich variables Getriebe, verbunden mit der Antriebsquelle; und
einer Steuereinheit, die das kontinuierlich variable Getriebe elektronisch steuert, wobei die Steuereinheit konfiguriert ist, um eine Steuerung des Schaltens in einen Kick-Down-Modus durchzuführen, der ein Geschwindigkeit-Änderungsverhältnis zu einer niedrigeren Seite als ein Geschwindigkeit-Änderungsverhältnis während eines Normal-Modus schaltet, gemäß einem Kick-Down-Befehl durch ein Kick-Down-Betriebsteil, betätigbar durch einen Fahrer und welcher getrennt von dem Beschleuniger-Betriebsteil vorgesehen ist, und ist konfiguriert,
um einen Zustand des Fahrzeugs vom Spreiz-Sitz-Typ zu erfassen anders als der Kick-Down-Betriebsteil und um ein Kick-Down-Löse-Befehl gemäß des Zustandes auszugeben, um den Kick-Down-Modus zu lösen und zu dem Normal-Modus zurückzukehren.

5. Fahrzeug vom Spreiz-Sitz-Typ gemäß Anspruch 4, wobei die Steuereinheit elektronisch mit einem Drossel-Position-Sensor verbunden ist, der einen Grad der Öffnung der Drossel erfasst, und wobei der Kick-Down-Löse-Befehl, ausgegeben gemäß dem Zustand des Fahrzeugs vom Spreiz-Sitz-Typ aufgrund eines Drossel-Position-Signals, abgegeben von dem Drossel-Position-Sensor, ausgegeben ist.

6. Fahrzeug vom Spreiz-Sitz-Typ gemäß Anspruch 5, wobei der Kick-Down-Löse-Befehl aufgrund des Drossel-Position-Signals ausgegeben ist, welches einen geschlossenen Zustand für eine bestimmte Zeit nach einen Offen-Zustand für eine spezifische Zeit zeigt.

7. Fahrzeug vom Spreiz-Sitz-Typ gemäß einem der Ansprüche 4 bis 6, wobei die Steuereinheit elektronisch mit einem Beschleuniger-Position-Sensor verbunden ist, der einen Zustand des Beschleuniger-Betriebsteils erfasst, und wobei der Kick-Down-Löse-Befehl, ausgegeben gemäß dem Zustand des Fahrzeugs vom Spreiz-Sitz-Typ, ausgegeben wird aufgrund eines Beschleuniger-Position-Signals, abgegeben von dem Beschleuniger-Position-Sensor.

8. Fahrzeug vom Spreiz-Sitz-Typ gemäß einem der Ansprüche 4 bis 7, wobei die Steuereinheit elektronisch mit einem Fahrzeug-Geschwindigkeit-Sensor verbunden ist, der eine Fahrzeug-Geschwindigkeit des Fahrzeugs vom Spreiz-Sitz-Typ erfasst, und wobei der Kick-Down-Löse-Befehl, ausgegeben gemäß einem Zustand des Fahrzeugs vom Spreiz-Sitz-Typ, ausgegeben wird, wenn die Fahrzeug-Geschwindigkeit ein spezieller Wert oder weniger ist.

9. Fahrzeug vom Spreiz-Sitz-Typ gemäß einem der Ansprüche 4 bis 8, wobei die Steuereinheit ein Kick-Down-Löse-Befehl gemäß einer Eingabe von einem Kick-Down-Löse-Schalter ausgibt und dadurch eine Steuerung des Lösens des Kick-Down-Modus und eine Rückkehr zu dem Normal-Modus ausführt.

10. Fahrzeug vom Spreiz-Sitz-Typ gemäß Anspruch 9, wobei der Kick-Down-Löse-Schalter ein Kick-Down-Löse-Knopf ist, der als Auslöser für die Ausgabe eines Kick-Down-Löse-Befehls dient, der Kick-Down-Löse-Knopf ist elektrisch mit der Steuereinheit verbunden, und wobei der Kick-Down-Löse-Befehl ausgegeben wird, wenn der Fahrer den Kick-Down-Löse-Knopf drückt.

11. Fahrzeug vom Spreiz-Sitz-Typ gemäß Anspruch 10, wobei der Kick-Down-Löse-Knopf an einer Position angeordnet ist, dass er durch einen Daumen des Fahrers betätigt werden kann.

12. Fahrzeug vom Spreiz-Sitz-Typ gemäß einem der Ansprüche 4 bis 11, wobei die Steuereinheit elektronisch mit einem Kick-Down-Knopf verbunden ist, der als Kick-Down-Betriebsteil dient, und wobei der Kick-Down-Betrieb durch den Fahrer der den Kick-Down-Knopf drückt ausgeführt wird.

13. Fahrzeug vom Spreiz-Sitz-Typ gemäß Anspruch 12, wobei eine Steuerung des Schaltens zu einem Kick-Down-Halte-Modus, der den Kick-Down-Modus für eine spezielle Zeit hält, durch ein weiteres Drücken des Kick-Down-Knopfs durchgeführt wird.

14. Fahrzeug vom Spreiz-Sitz-Typ gemäß einem der Ansprüche 4 bis 13, wobei die Steuereinheit elektronisch mit einem Elektromotor verbunden ist, der eine Bewegungsscheibe einer primären Scheibe in dem kontinuierlich variablen Getriebe bewegt und wobei eine Bewegungsgeschwindigkeit der Bewegungsscheibe gemäß dem Elektromotor langsamer ist zu einer Zeit der Steuerung der Rückkehr zu dem Normal-Modus als zu einer Zeit der Steuerung des Schaltens zu dem Kick-Down-Modus.

15. Fahrzeug vom Spreiz-Sitz-Typ gemäß einem der Ansprüche 4 bis 14, wobei das Fahrzeug vom Spreiz-Sitz-Typ ein Zwei-Rad-Motorfahrzeug ist, und wobei das kontinuierlich variable Getriebe in einem Leistungs-Übertragungspfad zwischen einem Motor des Zwei-Rad-Motorfahrzeugs und einem Antriebsrad vorgesehen ist.

16. Geschwindigkeit-Änderungs-Steuerungseinheit für ein kontinuierlich variables Getriebe, vorgesehen in einem Leistungs-Übertragungspfad zwischen einem Motor eines Zwei-Rad-Motorfahrzeugs und einem Antriebsrad mit:
einem Normal-Modus-Geschwindigkeit-Änderungsmechanismus, der einen Normal-Modus der Steuerung eines Geschwindigkeit-Änderungsverhältnisses gemäß einer Fahrbedingung des Zwei-Rad-Motorfahrzeugs erreicht;
einem Kick-Down-Befehl-Eingabemechanismus, der ein Kick-Down-Befehl manuell eingibt, ein Kick-Down-Modus-Geschwindigkeit-Änderungsmechanismus, der einen Kick-Down-Modus des Schaltens eines Geschwindigkeit-Änderungsverhältnisses zu einer niedrigeren Seite als ein Geschwindigkeit-Änderungsverhältnis zu einer Zeit des Normal-Modus in Enrviderung auf einer Eingabe des Kick-Down-Befehls erreicht; und
einen Löse-Mechanismus, der einen Kick-Down-Löse-Befehl gemäß dem Erreichen einer speziellen Bedingung des Fahrzeugs anders als der Kick-Down-Befehl-Eingabemechanismus ausgibt, um den Kick-Down-Modus zu lösen und dadurch zu dem Normal-Modus zurückzukehren.

17. Geschwindigkeit-Änderungs-Steuerungseinheit für ein kontinuierlich variables Getriebe gemäß Anspruch 16, wobei die Kick-Down-Geschwindigkeit-Änderungseinrichtung ein Geschwindigkeit-Änderungsverhältnis zu einem Ziel-Geschwindigkeit-Änderungsverhältnis, geschaltet zu einer niedrigeren Seite als das Geschwindigkeit-Änderungsverhältnisses zu dem Zeitpunkt des Normal-Modus, steuert, wenn eine Ausführung des Kick-Down-Modus beginnt, und dass Geschwindigkeit-Änderungsverhältnis beibehält, wenn das Ziel-Geschwindigkeit-Änderungsverhältnis während der Ausführung des Kick-Down-Modus erreicht ist.

18. Geschwindigkeit-Änderungs-Steuerungseinheit für ein kontinuierlich variables Getriebe gemäß Anspruch 17, wobei während der Ausführung des Kick-Down-Modus die Kick-Down-Geschwindigkeit-Änderungseinrichtung ein Geschwindigkeit-Änderungsverhältnis ändert aufgrund eines Korrekturwertes, erhalten durch Schalten eines Kennfeld-Befehlwertes verwendet zu einer Zeit des Normal-Modus zu einer niedrigeren Seite des Geschwindigkeit-Änderungsverhältnisses durch ein vorgegebenen Wert.

19. Geschwindigkeit-Änderungs-Steuereinheit für ein kontinuierlich variables Getriebe gemäß einem der Ansprüche 16 bis 18, wobei der Kick-Down-Befehl-Eingabemechanismus an einer Fahrerseite angeordnet ist und an einer Position, die durch einen Daumen des Fahrers betätigt werden kann.

20. Geschwindigkeit-Änderungs-Steuerungseinheit für ein kontinuierlich variables Getriebe gemäß einem der Ansprüche 16 bis 19, wobei der Löse-Mechanismus an einer Fahrerseite angeordnet ist und an einer Position, die durch einen Daumen des Fahrers betätigt werden kann.

21. Geschwindigkeit-Änderungs-Steuerungseinheit für ein kontinuierlich variables Getriebe gemäß einem der Ansprüche 16 bis 20, wobei der Kick-Down-Befehl-Eingabemechanismus und der Löse-Mechanismus den gleichen Schalter haben, und der Kick-Down-Befehl ist ausgegeben, wenn der Schalter zu einer ersten Position betrieben ist und der Kick-Down-Löse-Befehl ist ausgegeben, wenn der Schalter zu einer zweiten Position betrieben ist.

22. Geschwindigkeit-Änderungs-Steuerungseinheit für ein kontinuierlich variables Getriebe gemäß einem der Ansprüche 16 bis 20, wobei der Kick-Down-Befehl-Eingabemechanismus und der Löse-Mechanismus den gleichen Schalter haben, und der Kick-Down-Befehl und der Kick-Down-Löse-Befehl abwechselnd ausgegeben wird zu jeder Zeit, wenn der Schalter betrieben ist.

23. Geschwindigkeit-Änderungs-Steuerungseinheit für ein kontinuierlich variables Getriebe gemäß einem der Ansprüche 16 bis 20, wobei der Kick-Down-Befehl-Eingabemechanismus und der Löse-Mechanismus getrennte Schalter haben, und eine höhere Priorität zu einem Befehl gegeben wird, der durch einen letzten Schalterbetrieb ausgegeben ist, als einen Befehl, der durch einen vorangehenden Schalterbetrieb ausgegeben ist.

24. Geschwindigkeit-Änderungs-Steuerungseinheit für ein kontinuierlich variables Getriebe gemäß einem der Ansprüche 16 bis 20, wobei, wenn ein Kick-Down-Befehl wiederholt eingegeben ist, nachdem der Kick-Down-Befehl-Eingabemechanismus betrieben ist, ändern der Kick-Down-Modus-Geschwindigkeit-Änderungsmechanismus weiter eine Geschwindigkeitsänderung zu einer niedrigeren Seite des Geschwindigkeit-Änderungsverhältnisses.

25. Geschwindigkeit-Änderungs-Steuerungseinheit für ein kontinuierlich variables Getriebe gemäß einem der Ansprüche 16 bis 18, wobei, wenn eine Beschleuniger-Position einer vorgegebenen Bedingung genügt, gibt der Löse-Mechanismus den Kick-Down-Löse-Befehl aus.

26. Geschwindigkeit-Änderungs-Steuerungseinheit für ein kontinuierlich variables Getriebe gemäß einem der Ansprüche 16 bis 18, wobei, wenn die Anzahl der Umdrehungen eines Motors einer speziellen Bedingung genügt, gibt der Löse-Mechanismus den Kick-Down-Löse-Befehl aus.

27. Geschwindigkeit-Änderungs-Steuerungseinheit für ein kontinuierlich variables Getriebe gemäß einem der Ansprüche 16 bis 18, wobei, wenn eine spezielle Zeit verstrichen ist, nachdem ein Kick-Down-Befehl eingegeben ist, gibt der Löse-Mechanismus den Kick-Down-Löse-Befehl aus.

28. Geschwindigkeit-Änderungs-Steuerungseinheit für ein kontinuierlich variables Getriebe gemäß einem der Ansprüche 16 bis 18, wobei, wenn eine Beschleunigung des Fahrzeugs einer speziellen Bedingung genügt, gibt der Löse-Mechanismus den Kick-Down-Löse-Befehl aus.

29. Geschwindigkeit-Änderungs-Steuerungseinheit für ein kontinuierlich variables Getriebe gemäß einem der Ansprüche 16 bis 18, wobei, wenn ein Betrieb des Bremsens des Fahrzeugs durchgeführt ist, gibt der Löse-Mechanismus den Kick-Down-Löse-Befehl aus.

30. Geschwindigkeit-Änderungs-Steuerungseinheit für ein kontinuierlich variables Getriebe gemäß einem der Ansprüche 16 bis 18, wobei der Löse-Mechanismus einen Bestimmungsmechanismus beinhaltet, der einen Löse-Befehl ausgibt, wenn eine spezielle Bedingung erfüllt ist, und wobei, wenn zumindest zwei der speziellen Bedingungen aus einer Beschleuniger-Position, der Anzahl der Umdrehungen des Motors, ein Bremsbetrieb, ein Zeitraum der verstrichen ist, nachdem der Kick-Down-Befehl eingegeben ist, und einer Beschleunigung des Fahrzeugs, erfüllt ist, gibt der Bestimmungsmechanismus den Kick-Down-Löse-Befehl aus.

31. Geschwindigkeit-Änderungs-Steuerungseinheit für ein kontinuierlich variables Getriebe gemäß einem der Ansprüche 16 bis 20, wobei der Löse-Mechanismus einen Schalter, der einen Kick-Down-Löse-Befehl gemäß eines Fahrerbetriebs ausgibt, und einen Bestimmungsmechanismus, der ein Löse-Befehl ausgibt, wenn eine spezielle Bedingung erfüllt ist, beinhaltet, und wobei, wenn ein Kick-Down-Löse-Befehl ausgegeben von dem Schalter als eine spezielle Bedingung gegeben ist, oder wenn zumindest zwei der speziellen Bedingungen aus einer Beschleuniger-Position, einer Anzahl der Umdrehungen eines Motors, ein Bremsbetrieb, ein Zeitraum, der verstrichen ist, nachdem der Kick-Down-Befehl eingegeben ist, und einer Beschleunigung des Fahrzeugs, erfüllt sind, gibt der Bestimmungsmechanismus den Kick-Down-Löse-Befehl aus.

## Revendications

1. Procédé de contrôle de changement de vitesse d'une transmission variable en continu montée dans un véhicule de type à enfourcher, ladite transmission variable en continu étant pourvue dans un chemin de transmission de puissance entre une source d'entraînement et une roue d'entraînement, comprenant les étapes suivantes :
mise en oeuvre du contrôle de passage en mode de rétrogradation de reprise (50) consistant à passer à un rapport de changement de vitesse à un côté inférieur à un rapport de changement de vitesse durant un mode normal (60) sur base d'une commande de rétrogradation de reprise par un signal d'une pièce d'actionnement de rétrogradation de reprise pourvue séparément d'une pièce d'actionnement d'accélérateur et actionnée (42) par le conducteur ;
détection de l'état du véhicule de type à enfourcher (1) autrement que par la pièce d'actionnement de rétrogradation de reprise ;
envoi d'une commande de libération de rétrogradation de reprise en fonction de l'état détecté ; et
mise en oeuvre du contrôle de libération du mode de rétrogradation de reprise et retour du mode de rétrogradation de reprise au mode normal (60).

2. Procédé selon la revendication 1 dans lequel, dans le mode de rétrogradation de reprise, le rapport de changement de vitesse est abaissé à un rapport de changement de vitesse spécifié, qui est passé au côté inférieur d'un rapport de changement de vitesse durant le mode normal d'une quantité spécifiée, et dans lequel ledit rapport spécifié est maintenu.

3. Procédé selon la revendication 1 ou 2, dans lequel la commande de libération de rétrogradation de reprise est automatiquement envoyée sur base d'une position de manette des gaz, d'une vitesse du véhicule ou d'une position d'accélérateur, ou dans lequel la commande de libération de rétrogradation de reprise est envoyée sur base d'un actionnement de conducteur.

4. Véhicule de type à enfourcher, comprenant :
une source d'entraînement dont une sortie est contrôlée en fonction d'une pièce d'actionnement d'accélérateur actionnée par un conducteur ;
une transmission variable en continu connectée à la source d'entraînement ; et
une unité de contrôle qui contrôle électroniquement la transmission variable en continu,
dans lequel l'unité de contrôle est configurée pour mettre en oeuvre un contrôle de passage en mode de rétrogradation de reprise qui passe d'un rapport de changement de vitesse à un côté inférieur à un rapport de changement de vitesse durant un mode normal, en fonction d'une commande de rétrogradation de reprise par une pièce d'actionnement de rétrogradation de reprise, actionnable par un conducteur et pourvue séparément de la pièce d'actionnement d'accélérateur, et est configurée pour détecter un état du véhicule de type à enfourcher autrement que par la pièce d'actionnement de rétrogradation de reprise et pour envoyer une commande de libération de rétrogradation de reprise en fonction de l'état, pour libérer le mode de rétrogradation de reprise et revenir au mode normal.

5. Véhicule de type à enfourcher selon la revendication 4, dans lequel l'unité de contrôle est connectée électroniquement à un capteur de position de manette des gaz qui détecte un degré d'ouverture d'une manette des gaz, et dans lequel la commande de libération de rétrogradation de reprise envoyée en fonction de l'état du véhicule de type à enfourcher est envoyée sur base d'un signal de position de manette des gaz sorti par le capteur de position de manette des gaz.

6. Véhicule de type à enfourcher selon la revendication 5, dans lequel la commande de libération de rétrogradation de reprise est envoyée sur base du signal de position de manette des gaz qui montre un état fermé durant un temps spécifié après un état ouvert durant un temps spécifié.

7. Véhicule de type à enfourcher selon l'une des revendications 4 à 6, dans lequel l'unité de contrôle est connectée électroniquement à un capteur de position d'accélérateur qui détecte un état de la pièce d'actionnement d'accélérateur, et dans lequel la commande de libération de rétrogradation de reprise envoyée en fonction de l'état du véhicule de type à enfourcher est envoyée sur base d'un signal de position d'accélérateur sorti par le capteur de position d'accélérateur.

8. Véhicule de type à enfourcher selon l'une des revendications 4 à 7, dans lequel l'unité de contrôle est connectée électroniquement à un capteur de vitesse du véhicule qui détecte une vitesse du véhicule de type à enfourcher, et dans lequel la commande de libération de rétrogradation de reprise envoyée en fonction d'un état de fonctionnement du véhicule de type à enfourcher est envoyée lorsque la vitesse du véhicule est inférieure ou égale à une valeur spécifiée.

9. Véhicule de type à enfourcher selon l'une des revendications 4 à 8, dans lequel l'unité de contrôle envoie une commande de libération de rétrogradation de reprise en fonction d'une entrée d'un contacteur de libération de rétrogradation de reprise, et met ainsi en oeuvre un contrôle de libération du mode de rétrogradation de reprise et de retour au mode normal.

10. Véhicule de type à enfourcher selon la revendication 9, dans lequel le contacteur de libération de rétrogradation de reprise est un bouton de libération de rétrogradation de reprise servant de déclencheur pour sortir la commande de libération de rétrogradation de reprise, le bouton de libération de rétrogradation de reprise étant connecté électriquement à l'unité de contrôle, et dans lequel la commande de libération de rétrogradation de reprise est envoyée lorsque le conducteur appuie sur le bouton de libération de rétrogradation de reprise.

11. Véhicule de type à enfourcher selon la revendication 10, dans lequel le bouton de libération de rétrogradation de reprise est agencé dans une position permettant un actionnement par un pouce du conducteur.

12. Véhicule de type à enfourcher selon l'une des revendications 4 à 11, dans lequel l'unité de contrôle est connectée électroniquement à un bouton de rétrogradation de reprise servant de pièce d'actionnement de rétrogradation de reprise, et dans lequel l'opération de rétrogradation de reprise est mise en oeuvre par une pression sur le bouton de rétrogradation de reprise par le conducteur.

13. Véhicule de type à enfourcher selon la revendication 12, dans lequel le contrôle de passage en mode de maintien de rétrogradation de reprise, qui maintient le mode de rétrogradation de reprise durant un temps spécifié, est mis en oeuvre en poussant d'avantage sur le bouton de rétrogradation de reprise.

14. Véhicule de type à enfourcher selon l'une des revendications 4 à 13, dans lequel l'unité de contrôle est connectée électroniquement à un moteur électrique qui déplace une poulie mobile d'une poulie primaire de la transmission variable en continu, et dans lequel une vitesse de déplacement de la poulie mobile en fonction du moteur électrique est plus faible au moment du contrôle de retour en mode normal qu'au moment du contrôle de passage en mode de rétrogradation de reprise.

15. Véhicule de type à enfourcher selon l'une des revendications 4 à 14, dans lequel le véhicule de type à enfourcher est un véhicule motorisé à deux roues, et dans lequel la transmission variable en continu est pourvue dans un chemin de transmission de puissance entre un moteur du véhicule motorisé à deux roues et une roue d'entraînement.

16. Unité de contrôle de changement de vitesse d'une transmission variable en continu pourvue dans un chemin de transmission de puissance entre un moteur du véhicule motorisé à deux roues et une roue d'entraînement, comprenant :
un mécanisme de changement de vitesse en mode normal mettant en oeuvre un mode normal de contrôle d'un rapport de changement de vitesse en fonction d'une condition de fonctionnement du véhicule motorisé à deux roues ;
un mécanisme d'entrée de commande de rétrogradation de reprise qui entre manuellement une commande de rétrogradation de reprise ;
un mécanisme de changement de vitesse en mode de rétrogradation de reprise mettant en oeuvre un mode de rétrogradation de reprise, qui passe à un rapport de changement de vitesse à un côté inférieur à un rapport de changement de vitesse utilisé en mode normal en réponse à une entrée de la commande de rétrogradation de reprise ; et
un mécanisme de libération qui envoie une commande de libération de rétrogradation de reprise en fonction de l'établissement d'une condition spécifiée du véhicule autre que le mécanisme d'entrée de commande de rétrogradation de reprise pour libérer le mode de rétrogradation de reprise et revenir ainsi au mode normal.

17. Unité de contrôle de changement de vitesse d'une transmission variable en continu selon la revendication 16, dans lequel le moyen de changement de vitesse de rétrogradation de reprise contrôle un rapport de changement de vitesse vers un rapport de changement de vitesse cible passé à un côté inférieur à un rapport de changement de vitesse durant le mode normal lorsque commence l'exécution du mode de rétrogradation de reprise, et maintient le rapport de changement de vitesse lorsque le rapport de changement de vitesse cible est atteint durant l'exécution du mode de rétrogradation de reprise.

18. Unité de contrôle de changement de vitesse d'une transmission variable en continu selon la revendication 17 dans laquelle, durant l'exécution du mode de rétrogradation de reprise, le moyen de changement de vitesse de rétrogradation de reprise change un rapport de changement de vitesse sur base d'une valeur de correction obtenue en changeant une valeur de commande de table utilisée durant le mode normal vers un côté inférieur à un rapport de changement de vitesse d'une valeur établie.

19. Unité de contrôle de changement de vitesse d'une transmission variable en continu selon l'une des revendications 16 à 18, dans laquelle le mécanisme d'entrée de commande de rétrogradation de reprise est agencé sur un côté du conducteur et à une position qui permet un actionnement par un pouce du conducteur.

20. Unité de contrôle de changement de vitesse d'une transmission variable en continu selon l'une des revendications 16 à 19, dans laquelle le mécanisme de libération est agencé sur un côté du conducteur et dans une position permettant un actionnement par un pouce du conducteur.

21. Unité de contrôle de changement de vitesse d'une transmission variable en continu selon l'une des revendications 16 à 20, dans laquelle le mécanisme d'entrée de commande de rétrogradation de reprise et le mécanisme de libération comportent un même contacteur, et la commande de rétrogradation de reprise est envoyée lorsque le contacteur est actionné dans une première position et la commande de libération de rétrogradation de reprise est envoyée lorsque le contacteur est actionné dans une deuxième position.

22. Unité de contrôle de changement de vitesse d'une transmission variable en continu selon l'une des revendications 16 à 20, dans laquelle le mécanisme d'entrée de commande de rétrogradation de reprise et le mécanisme de libération comportent un même contacteur, et la commande de rétrogradation de reprise et la commande de libération de rétrogradation de reprise sont envoyées alternativement chaque fois que le contacteur est actionné.

23. Unité de contrôle de changement de vitesse d'une transmission variable en continu selon l'une des revendications 16 à 20, dans laquelle le mécanisme d'entrée de commande de rétrogradation de reprise et le mécanisme de libération comportent des contacteurs séparés, et une priorité supérieure est donnée à une commande envoyée par un actionnement de contacteur postérieure à une commande envoyée par un actionnement de contacteur antérieure.

24. Unité de contrôle de changement de vitesse d'une transmission variable en continu selon l'une des revendications 16 à 20 dans laquelle, lorsqu'une commande de rétrogradation de reprise est entrée de nouveau après l'actionnement du mécanisme d'entrée de commande de rétrogradation de reprise, le mécanisme de changement de vitesse en mode de rétrogradation de reprise change en outre un changement de vitesse à un côté inférieur d'un rapport de changement de vitesse.

25. Unité de contrôle de changement de vitesse d'une transmission variable en continu selon l'une des revendications 16 à 18 dans laquelle, lorsqu'une position de l'accélérateur répond à une condition spécifiée, le mécanisme de libération envoie la commande de libération de rétrogradation de reprise.

26. Unité de contrôle de changement de vitesse d'une transmission variable en continu selon l'une des revendications 16 à 18 dans laquelle, lorsque le nombre de révolutions d'un moteur répond à une condition spécifiée, le mécanisme de libération envoie la commande de libération de rétrogradation de reprise.

27. Unité de contrôle de changement de vitesse d'une transmission variable en continu selon l'une des revendications 16 à 18 dans laquelle, lorsqu'un temps spécifié s'écoule après l'entrée d'une commande de rétrogradation de reprise, le mécanisme de libération envoie la commande de libération de rétrogradation de reprise.

28. Unité de contrôle de changement de vitesse d'une transmission variable en continu selon l'une des revendications 16 à 18 dans laquelle, lorsque l'accélération d'un véhicule répond à une condition spécifiée, le mécanisme de libération envoie la commande de libération de rétrogradation de reprise.

29. Unité de contrôle de changement de vitesse d'une transmission variable en continu selon l'une des revendications 16 à 18 dans laquelle, lorsqu'une opération de freinage d'un véhicule est mise en oeuvre, le mécanisme de libération envoie la commande de libération de rétrogradation de reprise.

30. Unité de contrôle de changement de vitesse d'une transmission variable en continu selon l'une des revendications 16 à 18, dans laquelle le mécanisme de libération comprend un mécanisme de détermination qui sort une commande de libération lorsqu'une condition spécifiée est satisfaite et dans laquelle, lorsque sont satisfaites au moins deux des conditions spécifiées parmi une position d'accélérateur, le nombre de révolutions d'un moteur, un actionnement de freinage, une période qui s'écoule après que la commande de rétrogradation de reprise est entrée, et une accélération du véhicule, le mécanisme de détermination envoie la commande de libération de rétrogradation de reprise.

31. Unité de contrôle de changement de vitesse d'une transmission variable en continu selon l'une des revendications 16 à 20, dans laquelle le mécanisme de libération comprend un contacteur qui sort une commande de libération de rétrogradation de reprise en fonction d'un actionnement du conducteur, et un mécanisme de détermination qui sort une commande de libération lorsqu'une condition spécifiée est satisfaite, et dans laquelle, lorsqu'une commande de libération de rétrogradation de reprise sortie par le contacteur est donnée comme condition spécifiée ou lorsque sont satisfaites au moins deux des conditions spécifiées parmi une position d'accélérateur, le nombre de révolutions d'un moteur, un actionnement de freinage, une période qui s'écoule après que la commande de rétrogradation de reprise est entrée, et une accélération du véhicule, le mécanisme de détermination envoie la commande de libération de rétrogradation de reprise.
